(19) Europäisches Patentamt
European Patent Office
Office européen des brevets

(11) EP 2 519 474 B1

(12) # FASCICULE DE BREVET EUROPEEN

(45) Date de publication et mention de la délivrance du brevet:
**01.04.2015 Bulletin 2015/14**

(21) Numéro de dépôt: **10808928.5**

(22) Date de dépôt: **22.12.2010**

(51) Int Cl.:
***C03C 17/30*** (2006.01) ***G02B 1/10*** (2015.01)
***G02B 1/11*** (2015.01) ***G02C 7/02*** (2006.01)

(86) Numéro de dépôt international:
**PCT/FR2010/052895**

(87) Numéro de publication internationale:
**WO 2011/080472 (07.07.2011 Gazette 2011/27)**

(54) **ARTICLE D'OPTIQUE COMPORTANT UN REVETEMENT ANTIBUEE TEMPORAIRE AYANT UNE DURABILITE AMELIOREE**

OTPISCHER ARTIKEL MIT EINER TEMPORÄREN ANTIBESCHLAGBESCHICHTUNG MIT ERHÖHTER BESTÄNDIGKEIT

OPTICAL ARTICLE COMPRISING A TEMPORARY ANTI-FOGGING COATING WITH IMPROVED DURABILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2010 FR 1053269**
**31.12.2009 FR 0959685**

(43) Date de publication de la demande:
**07.11.2012 Bulletin 2012/45**

(73) Titulaire: **Satisloh AG**
**6340 Baar (CH)**

(72) Inventeurs:
- **CADET, Mamonjy**
**F-94220 Charenton Le Pont (FR)**
- **FEUILLADE, Mathieu**
**F-94220 Charenton Le Pont (FR)**
- **HENKY, Francis**
**F-94220 Charenton Le Pont (FR)**

(74) Mandataire: **Coralis Harle**
**14-16, rue Ballu**
**75009 Paris (FR)**

(56) Documents cités:
**EP-A1- 1 688 469** **JP-A- 2002 240 186**
**JP-A- 2002 308 651** **JP-A- 2004 317 539**
**US-A1- 2005 008 784** **US-A1- 2006 088 666**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 519 474 B1

## Description

La présente invention concerne un article d'optique revêtu d'un revêtement comportant à sa surface des groupes silanols, en général un revêtement antireflet, dont la surface a été modifiée afin de permettre une application efficace et durable d'une solution antibuée temporaire, ainsi qu'un procédé de fabrication d'un tel article d'optique.

De nombreux supports, tels que des matières plastiques et le verre, présentent l'inconvénient de se recouvrir de buée lorsque la température de leur surface descend au-dessous du point de rosée de l'air ambiant. C'est le cas notamment du verre que l'on utilise pour former des vitrages pour véhicules de transport ou le bâtiment, des verres de lunettes, des lentilles, des miroirs, etc. La formation de buée sur ces surfaces entraîne une diminution de la transparence, due à la diffusion de la lumière par les gouttes d'eau, ce qui peut provoquer une gêne importante.

Pour éviter la formation de buée dans un environnement très humide, c'est-à-dire la condensation de minuscules gouttelettes d'eau sur un support, on a proposé de déposer sur la surface externe de ce support des revêtements hydrophiles, ayant un faible angle de contact statique avec l'eau, de préférence inférieur à 50°, mieux inférieur à 25°. Ces revêtements antibuée permanents agissent comme des éponges vis-à-vis de la buée et permettent aux gouttelettes d'eau d'adhérer à la surface du support en formant un film très fin donnant une sensation de transparence. Ces revêtements sont généralement constitués d'espèces très hydrophiles telles que des sulfonates ou des polyuréthanes.

Des produits commerciaux comportent des couches hydrophiles de plusieurs microns d'épaisseur.

D'une manière générale, lorsque l'épaisseur des revêtements est élevée (plusieurs microns), ces revêtements, par suite de l'absorption d'eau, gonflent, se ramollissent et deviennent moins résistants mécaniquement.

Par revêtement antibuée permanent, on entend un revêtement dont les propriétés hydrophiles découlent de composés hydrophiles liés de façon permanente à un autre revêtement ou support. La demande EP 1324078 décrit une lentille revêtue d'un revêtement anti-abrasion et d'un revêtement antireflet multicouche comprenant une alternance de couches de haut et de bas indice de réfraction dont la couche externe est une couche de bas indice de réfraction (1,42-1,48) de 5 à 100 nm d'épaisseur formant un revêtement antibuée consistant en une couche hybride possédant un angle de contact statique avec l'eau inférieur à 10°, obtenue par dépôt sous vide simultanément d'un composé organique et de silice ou de silice et d'alumine, c'est-à-dire par co-évaporation de ces différents constituants. Le revêtement antibuée contient de préférence de 0,02 à 70 % en masse de composé organique par rapport à la masse totale du revêtement, et typiquement de 6 à 15 % en masse, d'après les exemples.

Le composé organique comporte un groupe hydrophile et un groupe réactif, par exemple un groupe trialcoxysilyle ayant de 3 à 15 atomes de carbone, et possède de préférence une masse molaire de 150 à 1500 g/mol. Certains composés préférés possèdent un squelette polyéther, notamment polyoxyéthylène et un groupe réactif à chaque extrémité de la molécule. Parmi les composés préférés figurent le polyéthylène glycol glycidyl éther, le polyéthylène glycol monoacrylate et le N-(3-triméthoxysilylpropyl)gluconamide.

Le revêtement antibuée se présente donc comme une couche de silice (ou de silice et d'alumine) incorporant un composé organique hydrophile. Son caractère antibuée évolue cependant dans le temps, et l'on observe progressivement une détérioration des propriétés antibuée. Lorsqu'elles deviennent trop faibles, elles peuvent être restaurées par un traitement de "lavage" du film antibuée, en particulier un traitement par plasma.

En pratique, le procédé de co-évaporation de la demande EP 1324078 est très difficile à mettre en oeuvre. Un procédé permettant d'obtenir un revêtement antibuée sans mettre en oeuvre de co-évaporation serait préférable.

Les brevets US 6,251,523 et US 6,379,776 décrivent un verre antibuée et antireflet pour automobiles ou lentilles, comprenant un substrat en verre comportant un revêtement antireflet à base de silice de 110-250 nm d'épaisseur présentant une rugosité de surface Ra de l'ordre de 5-10 nm, lui-même revêtu d'un revêtement antibuée permanent de 8 nm d'épaisseur obtenu par dépôt par voie liquide ou en phase vapeur du composé $CH_3O-(CH_2CH_2O)_{6-9}-(CH_2)_3Si(OCH_3)_3$ ou d'un hydrolysat de ce composé. Au stade initial, le revêtement antibuée présente un angle de contact statique avec l'eau de 3°.

Une autre solution pour combiner propriétés antireflet et antibuée consiste à utiliser une couche mince poreuse de bas indice de réfraction, constituée en partie de tensioactifs, lesquels permettent à la couche d'acquérir des propriétés antibuée. Cette couche est généralement déposée sur une surface hydrophile.

Ainsi, le brevet US 5997621 décrit un revêtement poreux antireflet et antibuée à base d'oxydes métalliques (billes de silice) et de tensioactifs anioniques modérément solubles dans l'eau, possédant généralement une tête hydrophile ionique de type acide carboxylique, sulfonate, phosphate et une chaîne fluorée. Afin d'être immobilisés sur un substrat, les tensioactifs sont de préférence capables de se lier de façon covalente aux oxydes métalliques. La demande WO 97/43668 décrit une construction analogue.

La demande EP 0871046 décrit un système antibuée et antireflet comprenant une couche poreuse à base d'oxyde inorganique déposée sur une couche absorbante d'eau de quelques microns d'épaisseur, obtenue par polycondensation d'un hydrolysat d'alcoxyde inorganique en présence d'un composé de l'acide polyacrylique. La couche poreuse, qui joue le rôle d'antireflet, permet l'accès de l'eau à la couche absorbante.

Des propriétés antibuée peuvent aussi être obtenues en appliquant des solutions temporaires commerciales,

disponibles sous forme de spray ou de lingettes, sur des verres de lunettes comportant en tant que couche externe un revêtement antisalissure (hydrophobe et oléophobe), souvent considéré comme indispensable lorsque le verre ophtalmique dispose d'un revêtement antireflet. Elles permettent d'obtenir sur une courte période de temps la propriété antibuée. L'aspect facilité de nettoyage imparti par le revêtement antisalissure est conservé, mais après quelques essuyages, la propriété antibuée est largement dégradée. En effet, les solutions temporaires contiennent des matériaux de nature hydrophile ayant de faibles interactions avec la surface hydrophobe du revêtement antisalissure, si bien qu'après quelques essuyages, ces matériaux hydrophiles sont évacués.

Une solution plus intéressante consiste à obtenir un revêtement antibuée par application d'une solution hydrophile temporaire à la surface d'un revêtement précurseur d'un revêtement antibuée, ce qui représente une alternative aux revêtements antibuée permanents.

La demande EP 1275624 décrit une lentille revêtue d'une couche hydrophile inorganique dure à base d'oxydes métalliques et d'oxyde de silicium. Sa nature hydrophile et la présence de portions concaves de taille nanométrique à sa surface permettent d'imprégner un surfactant et de le retenir adsorbé pendant une longue période, ce qui maintient un effet antibuée pendant plusieurs jours. Toutefois, un effet antibuée se manifeste aussi en l'absence de surfactant.

Les demandes JP 2004-317539 et JP 2005-281143 décrivent une lentille revêtue d'un revêtement antireflet multicouche et/ou d'un revêtement anti-abrasion et d'un revêtement précurseur de revêtement antibuée, présentant un angle de contact statique avec l'eau de 50° à 90°. Le revêtement antibuée proprement dit, qui est un revêtement temporaire, est obtenu après application à la surface du revêtement précurseur d'un surfactant.

Le revêtement précurseur du revêtement antibuée est obtenu à partir d'une composition comprenant un composé organique comportant un groupe hydrophile de nature polyoxyéthylène, un groupe réactif capable de réagir avec la couche externe du revêtement antireflet, notamment une couche de silice, tel que les groupes alcoxysilane $Si(OR)_n$, silanol SiOH ou isocyanate, et optionnellement un groupe hydrophobe fluoré, et la composition est choisie de façon à ce que l'angle de contact statique avec l'eau du revêtement précurseur du revêtement antibuée varie de 50° à 90°. Les composés organiques utilisés dans le précurseur du revêtement antibuée ont préférentiellement une masse molaire de 700-5000 ou 430-3700 g/mol. Comme exemples de tels composés, on peut citer les composés $CH_3O(CH_2CH_2O)_{22}CONH(CH_2)_3Si(OCH_3)_3$ ou $C_8F_{17}O(CH_2CH_2O)_2CONH(CH_2)_3Si(OCH_3)_3$. Le revêtement précurseur est décrit comme ayant de 0,5 à 20 nm d'épaisseur. L'angle de contact relativement élevé du revêtement précurseur est recherché car il permet, selon ces demandes, d'éliminer facilement les salissures provenant du séchage de gouttes d'eau.

On continue cependant à chercher des compositions pour revêtement antibuée temporaire à partir desquelles on peut former, par des procédés facilement mis en oeuvre, des couches dont les propriétés antibuée sont plus efficaces, plus durables dans le temps et/ou sous l'action de sollicitations mécaniques, tout en conservant une facilité de nettoyage acceptable.

Des revêtements antibuée présentant également de bonnes propriétés mécaniques, (résistance à l'abrasion et à la rayure) sont recherchés. L'objectif de la présente invention est la préparation de tels revêtements antibuée temporaires, qui améliorent sensiblement la durabilité de la propriété antibuée, tout en conservant de bonnes propriétés mécaniques.

Un autre objectif de l'invention est l'obtention d'un revêtement antibuée immédiatement opérationnel, c'est-à-dire un revêtement qui, lorsqu'un substrat en verre transparent revêtu de ce revêtement est placé dans des conditions générant de la buée sur ledit substrat non équipé dudit revêtement, permet d'atteindre immédiatement (c'est à dire en moins de 1 seconde) une acuité visuelle > 6/10$^{ème}$, et préférentiellement 10/10$^{ème}$, sans apparition de buée pour un observateur observant à travers le verre revêtu une échelle d'acuité visuelle E de Snellen (ECHELLE ARMAIGNAC (Tridents) (E de Snellen) LECTURE À 5M, réf. T6 disponible chez FAX INTERNATIONAL) située à 5 mètres de distance.

Un autre objectif de l'invention est l'obtention d'un article d'optique possédant à la fois des propriétés antibuée et antireflet.

Ces objectifs peuvent être atteints, selon l'invention, grâce à une modification des groupes silanols à la surface d'un article d'optique, par greffage d'un composé organosilane particulier.

Ainsi, la présente invention concerne un article d'optique, de préférence un verre de lunettes, comprenant un substrat revêtu d'un revêtement comportant à sa surface des groupes silanols et, en contact direct avec ce revêtement, un revêtement précurseur d'un revêtement antibuée, caractérisé en ce que le revêtement précurseur du revêtement antibuée :

- est obtenu par greffage d'au moins un composé organosilane possédant :

    o un groupe polyoxyalkylène, et
    o au moins un atome de silicium porteur d'au moins un groupe hydrolysable,

- a une épaisseur inférieure ou égale à 5 nm,

- possède un angle de contact statique avec l'eau supérieur à 10° et inférieur à 50°.

L'invention concerne également un article d'optique, de préférence un verre de lunettes, tel que ci-dessus, dont le revêtement précurseur du revêtement antibuée est en outre revêtu d'un film d'une solution liquide contenant au moins un tensioactif. En d'autres termes, cet article d'optique est revêtu d'un revêtement àntibuée temporaire selon l'invention.

L'invention sera décrite plus en détail en référence au dessin annexé, dans lequel la figure 1 représente l'évolution, en fonction du temps, des propriétés antibuée d'articles d'optique selon l'invention et comparatifs initialement exposés à de la vapeur chaude.

Dans la présente demande, un revêtement qui est "sur" un substrat/revêtement ou qui a été déposé "sur" un substrat/revêtement est défini comme un revêtement qui (i) est positionné au-dessus du substrat/revêtement, (ii) n'est pas nécessairement en contact avec le substrat/revêtement, c'est-à-dire qu'un ou plusieurs revêtements intermédiaires peuvent être disposés entre le substrat/revêtement et le revêtement en question (toutefois, il est de préférence en contact avec ledit substrat/revêtement), et (iii) ne recouvre pas nécessairement le substrat/revêtement complètement. Lorsque "une couche 1 est localisée sous une couche 2", on comprendra que la couche 2 est plus éloignée du substrat que la couche 1.

Par "revêtement antibuée", on entend dans la présente demande un revêtement qui, lorsqu'un substrat en verre transparent revêtu de ce revêtement est placé dans des conditions générant de la buée sur ledit substrat non équipé dudit revêtement, permet immédiatement une acuité visuelle > $6/10^{ème}$ pour un observateur observant à travers le verre revêtu une échelle d'acuité visuelle située à 5 mètres de distance. Plusieurs tests permettant d'évaluer les propriétés antibuée d'un revêtement sont décrits dans la partie expérimentale. Dans des conditions génératrices de buée, les revêtements antibuée peuvent soit ne pas présenter de buée à leur surface (pas de distorsion visuelle dans le cas idéal, ou bien distorsion visuelle mais acuité visuelle > $6/10^{ème}$ dans les conditions de mesure indiquées ci-dessus), soit présenter de la buée à leur surface mais tout de même permettre, malgré la perturbation de la vision causée par la buée, une acuité visuelle > $6/10^{ème}$ dans les conditions de mesure indiquées ci-dessus. Un revêtement non antibuée ne permet pas une acuité visuelle > $6/10^{ème}$ tant qu'il est exposé à des conditions générant de la buée et présente généralement un voile de condensation dans les conditions de mesure indiquées ci-dessus.

Par "verre antibuée", on entend dans la présente demande un verre équipé d'un "revêtement antibuée" tel que défini ci-dessus.

Ainsi, le précurseur du revêtement antibuée selon l'invention, qui est un revêtement hydrophile, n'est pas considéré comme étant un revêtement antibuée au sens de l'invention, même s'il manifeste certaines propriétés antibuée, qui peuvent être constatées par exemple au moyen d'un test d'haleine décrit dans la partie expérimentale. Effectivement, ce précurseur de revêtement antibuée ne permet pas une acuité visuelle > $6/10^{ème}$ dans les conditions de mesure indiquées ci-dessus, comme cela apparaît sur la figure 1, qui sera commentée plus tard.

Par revêtement antibuée temporaire, on entend un revêtement antibuée obtenu après l'application d'une solution liquide contenant au moins un tensioactif à la surface d'un revêtement précurseur dudit revêtement antibuée. La durabilité d'un revêtement antibuée temporaire est généralement limitée par des essuyages de sa surface, les molécules de tensioactifs n'étant pas accrochées de façon permanente à la surface du revêtement mais simplement adsorbées plus ou moins durablement.

L'article d'optique préparé selon l'invention comprend un substrat, de préférence transparent, ayant des faces principales avant et arrière, l'une au moins desdites faces principales comprenant un revêtement comportant à sa surface des groupes silanols, de préférence les deux faces principales. Par face arrière (généralement concave) du substrat, on entend la face qui, lors de l'utilisation de l'article, est la plus proche de l'oeil du porteur. Inversement, par face avant (généralement convexe) du substrat, on entend la face qui, lors de l'utilisation de l'article, est la plus éloignée de l'oeil du porteur.

Bien que l'article selon l'invention puisse être un article d'optique quelconque susceptible d'être confronté à une formation de buée, tel qu'un écran, un vitrage pour l'industrie automobile ou du bâtiment, ou un miroir, il est de préférence une lentille optique, mieux une lentille ophtalmique, pour lunettes, ou une ébauche de lentille optique ou ophtalmique.

Ceci exclut des articles tels que des lentilles intraoculaires en contact avec des tissus vivants ou des lentilles de contact, qui ne sont intrinsèquement pas confrontées au problème de formation de buée, contrairement aux verres de lunettes.

Le revêtement comportant à sa surface des groupes silanols de l'invention peut être formé sur au moins l'une des faces principales d'un substrat nu, c'est-à-dire non revêtu, ou sur au moins l'une des faces principales d'un substrat déjà revêtu d'un ou plusieurs revêtements fonctionnels.

Le substrat de l'article d'optique selon l'invention peut être un verre minéral ou organique, par exemple un verre organique en matière plastique thermoplastique ou thermodurcissable.

Des classes de substrats particulièrement préférées sont les poly(thiouréthanes), les polyépisulfures et les

résines résultant de la polymérisation ou (co)polymérisation de bis allyl carbonates d'alkylène glycols. Ces derniers sont vendus, par exemple, sous la dénomination commerciale CR-39® par la société PPG Industries (lentilles ORMA® ESSILOR).

Dans certaines applications, il est préférable que la surface principale du substrat soit revêtue d'un ou plusieurs revêtements fonctionnels préalablement au dépôt du revêtement comportant à sa surface des groupes silanols. Ces revêtements fonctionnels classiquement utilisés en optique peuvent être, sans limitation, une couche de primaire antichoc, un revêtement anti-abrasion et/ou anti-rayures, un revêtement polarisé, un revêtement photochrome ou un revêtement coloré, en particulier une couche de primaire antichoc revêtue d'une couche anti-abrasion et/ou anti-rayures.

Le revêtement comportant à sa surface des groupes silanols est de préférence déposé sur un revêtement anti-abrasion et/ou anti-rayures. Le revêtement anti-abrasion et/ou anti-rayures peut être toute couche classiquement utilisée comme revêtement anti-abrasion et/ou anti-rayures dans le domaine des lentilles ophtalmiques.

Les revêtements résistant à l'abrasion et/ou aux rayures sont de préférence des revêtement durs à base de poly(méth)acrylates ou de silanes comprenant généralement une ou plusieurs charges minérales destinées à augmenter la dureté et/ou l'indice de réfraction du revêtement une fois durci. Par (méth)acrylate, on entend un acrylate ou un méthacrylate.

Les revêtements durs anti-abrasion et/ou anti-rayures sont de préférence élaborés à partir de compositions comprenant au moins un alcoxysilane et/ou un hydrolysat de celui-ci, obtenu par exemple par hydrolyse avec une solution d'acide chlorhydrique, et optionnellement des catalyseurs de condensation et/ou de durcissement et/ou des tensioactifs.

Parmi les revêtements recommandés dans la présente invention, on peut citer les revêtements à base d'hydrolysats d'époxysilanes tels que ceux décrits dans les brevets EP 0614957, US 4,211,823 et US 5,015,523.

L'épaisseur du revêtement anti-abrasion et/ou anti-rayures varie généralement de 2 à 10 $\mu$m, préférentiellement de 3 à 5 $\mu$m.

Préalablement au dépôt du revêtement anti-abrasion et/ou anti-rayures, il est possible de déposer sur le substrat un revêtement de primaire améliorant la résistance au choc et/ou l'adhésion des couches ultérieures dans le produit final.

Ce revêtement peut être toute couche de primaire antichoc classiquement utilisée pour les articles en matériau polymère transparent, tels que des lentilles ophtalmiques.

Parmi les compositions de primaire préférées, on peut citer les compositions à base de polyuréthanes thermoplastiques, telles que celles décrites dans les brevets JP 63-141001 et JP 63-87223, les compositions de primaire poly(méth)acryliques, telles que celles décrites dans le brevet US 5,015,523, les compositions à base de polyuréthanes thermodurcissables, telles que celles décrites dans le brevet EP 0404111 et les compositions à base de latex poly(méth)acryliques ou de latex de type polyuréthane, telles que celles décrites dans les brevets US 5,316,791 et EP 0680492.

Les compositions de primaire préférées sont les compositions à base de polyuréthanes et les compositions à base de latex, en particulier les latex de polyuréthane et poly(méth)acryliques, et leurs mélanges. Les couches de primaire ont généralement des épaisseurs, après durcissement, de 0,2 à 2,5 $\mu$m, de préférence de 0,5 à 1,5 $\mu$m.

Le revêtement comprenant à sa surface des groupes silanols va maintenant être décrit. Par revêtement comprenant à sa surface des groupes silanols, on entend un revêtement qui possède naturellement à sa surface des groupes silanols, ou bien un revêtement dont les groupes silanols ont été créés après qu'il a été soumis à un traitement d'activation de surface. Ce revêtement est donc un revêtement à base de siloxanes ou de silice, par exemple, sans limitation, une couche de silice, un revêtement sol-gel, à base notamment d'organosilanes tels que des alcoxysilanes, ou un revêtement à base de colloïdes de silice. Il peut s'agir notamment d'un revêtement anti-abrasion et/ou anti-rayure, ou, selon le mode de réalisation préféré, d'un revêtement antireflet monocouche ou d'un revêtement antireflet multicouche dont la couche externe possède à sa surface des groupes silanols. Par couche externe d'un revêtement, on entend la couche la plus éloignée du substrat.

Le traitement d'activation de surface créant des groupes silanols ou du moins augmentant leur proportion à la surface d'un revêtement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide, généralement un plasma d'oxygène ou d'argon. Il peut également s'agir d'un traitement de surface acide ou basique et/ou par solvants (eau, eau oxygénée ou solvant organique). Plusieurs de ces traitements peuvent être combinés.

Par espèces énergétiques (et/ou réactives), on entend notamment des espèces ioniques ayant une énergie allant de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

Le traitement d'activation peut également être un traitement de surface chimique acide, basique, de préférence réalisé par voie liquide, ou bien un traitement au moyen d'un solvant ou mélange de solvants.

Le revêtement comportant à sa surface des groupes silanols est de préférence une couche de bas indice de

réfraction à base de silice (comprenant de la silice), idéalement consiste en une couche de silice ($SiO_2$), généralement obtenue par dépôt en phase vapeur.

Ladite couche à base de $SiO_2$ peut comprendre, en plus de la silice, un ou plusieurs autres matériaux conventionnellement utilisés pour la fabrication de couches minces, par exemple un ou plusieurs matériaux choisis parmi les matériaux diélectriques décrits ci-dessous dans la présente description. Cette couche à base de $SiO_2$ est de préférence exempte d'$Al_2O_3$.

Les inventeurs ont constaté qu'il n'était pas indispensable d'effectuer un traitement de surface lorsque la couche est une couche à base de silice, en particulier lorsqu'elle était obtenue par évaporation.

Le revêtement comportant à sa surface des groupes silanols comprend de préférence au moins 70 % en masse de $SiO_2$, mieux au moins 80 % en masse et mieux encore au moins 90 % en masse de $SiO_2$. Comme il a été dit, dans une réalisation optimale, il comprend 100 % en masse de silice.

Le revêtement comportant à sa surface des groupes silanols peut également être un revêtement sol-gel à base de silanes tels que des alcoxysilanes, par exemple le tétraéthoxysilane ou des organosilanes tels que le $\gamma$-glycidoxypropyltriméthoxysilane. Un tel revêtement est obtenu par dépôt par voie liquide, en utilisant une composition liquide contenant un hydrolysat de silanes et éventuellement des matériaux colloïdaux de haut (> 1,55, préférentiellement > 1,60, mieux > à 1,70) ou de bas ($\leq$ 1,55) indice de réfraction. Un tel revêtement dont les couches comprennent une matrice hybride organique/inorganique à base de silanes dans laquelle sont dispersés des matériaux colloïdaux permettant d'ajuster l'indice de réfraction de chaque couche sont décrits par exemple dans le brevet FR 2858420.

Selon un mode de réalisation de l'invention, le revêtement comportant à sa surface des groupes silanols est une couche à base de silice déposée sur un revêtement anti-abrasion, de préférence déposée directement sur ce revêtement anti-abrasion.

Ladite couche à base de silice (comprenant de la silice) est de préférence une couche de silice, généralement obtenue par dépôt en phase vapeur. Elle a de préférence une épaisseur inférieure ou égale à 500 nm, mieux variant de 5 à 20 nm, et encore mieux de 10 à 20 nm d'épaisseur.

De préférence, le dépôt de ladite couche à base de silice est réalisé en régulant la pression, par ajout de gaz dans l'enceinte de dépôt, le gaz étant sous forme non ionique, préférentiellement par ajout d'oxygène, à une pression allant typiquement de $5.10^{-5}$ à $5.10^{-4}$ mbar.

Selon un autre mode de réalisation de l'invention, qui constitue le mode de réalisation préféré, l'article d'optique selon l'invention comporte un revêtement antireflet. Lorsqu'un tel revêtement est présent, il constitue généralement le revêtement comportant à sa surface des groupes silanols au sens de l'invention. Ce revêtement antireflet peut être tout revêtement antireflet classiquement utilisé dans le domaine de l'optique, en particulier de l'optique ophtalmique, à condition qu'il comporte à sa surface des groupes silanols.

Un revêtement antireflet se définit comme un revêtement, déposé à la surface d'un article d'optique, qui améliore les propriétés anti-réfléchissantes de l'article d'optique final. Il permet de réduire la réflexion de la lumière à l'interface article-air sur une portion relativement large du spectre visible.

Comme cela est bien connu également, les revêtements antireflet comprennent classiquement un empilement monocouche ou multicouche de matériaux diélectriques. Ce sont de préférence des revêtements multicouches, comprenant des couches de haut indice de réfraction (HI) et des couches de bas indice de réfraction (BI).

Dans la présente demande, une couche du revêtement antireflet est dite couche de haut indice de réfraction lorsque son indice de réfraction est supérieur à 1,55, de préférence supérieur ou égal à 1,6, mieux supérieur ou égal à 1,8 et encore mieux supérieur ou égal à 2,0. Une couche d'un revêtement antireflet est dite couche de bas indice de réfraction lorsque son indice de réfraction est inférieur ou égal à 1,55, de préférence inférieur ou égal à 1,50, mieux inférieur ou égal à 1,45. Sauf indication contraire, les indices de réfraction auxquels il est fait référence dans la présente invention sont exprimés à 25 °C pour une longueur d'onde de 550 nm.

Les couches HI sont des couches de haut indice de réfraction classiques, bien connues dans la technique. Elles comprennent généralement un ou plusieurs oxydes minéraux tels que, sans limitation, la zircone ($ZrO_2$), l'oxyde de titane ($TiO_2$), le pentoxyde de tantale ($Ta_2O_5$), l'oxyde de néodyme ($Nd_2O_5$), l'oxyde de praséodyme ($Pr_2O_3$), le titanate de praséodyme ($PrTiO_3$), $La_2O_3$, $Dy_2O_5$, $Nb_2O_5$, $Y_2O_3$.

Les couches BI sont également bien connues et peuvent comprendre, sans limitation, $SiO_2$, $MgF_2$, ZrF4, de l'alumine ($Al_2O_3$), $AlF_3$, de la chiolite ($Na_3Al_3F_{14}$]), de la cryolite ($Na_3[AlF_6]$), et leurs mélanges, de préférence $SiO_2$ ou $SiO_2$ dopé avec de l'alumine. On peut également utiliser des couches SiOF ($SiO_2$ dopé au fluor).

Lorsqu'une couche BI comprenant un mélange de $SiO_2$ et d'$Al_2O_3$ est utilisée, elle comprend préférentiellement de 1 à 10 %, mieux de 1 à 8 % et encore mieux de 1 à 5 % en masse d'$Al_2O_3$ par rapport à la masse totale de $SiO_2$+ $Al_2O_3$ dans cette couche.

Généralement, les couches HI ont une épaisseur physique variant de 10 à 120 nm, et les couches BI ont une épaisseur physique variant de 10 à 100 nm.

Préférentiellement, l'épaisseur totale du revêtement antireflet est inférieure à 1 micromètre, mieux inférieure ou égale à 800 nm et mieux encore inférieure ou égale à 500 nm. L'épaisseur totale du revêtement antireflet est

généralement supérieure à 100 nm, de préférence supérieure à 150 nm.

De préférence encore, le revêtement antireflet comprend au moins deux couches de bas indice de réfraction (BI) et au moins deux couches de haut indice de réfraction (HI). Préférentiellement, le nombre total de couches du revêtement antireflet est inférieur ou égal à 8, mieux inférieur ou égal à 6.

Il n'est pas nécessaire que les couches HI et BI soient alternées dans le revêtement antireflet, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre.

Les différentes couches du revêtement antireflet sont préférentiellement déposées par dépôt en phase vapeur, sous vide, selon l'une des techniques suivantes : i) par évaporation, éventuellement assistée par faisceau ionique ; ii) par pulvérisation par faisceau d'ion ; iii) par pulvérisation cathodique ; iv) par dépôt chimique en phase vapeur assisté par plasma. Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide.

Lorsque le revêtement comportant à sa surface des groupes silanols est un revêtement antireflet, le facteur de réflexion lumineux d'un article revêtu d'un tel revêtement antireflet, noté $R_v$, est inférieur à 2,5 % par face, mieux inférieur à 2 % par face et encore mieux inférieur à 1 % par face de l'article. Dans un mode de réalisation optimal, l'article comprend un substrat dont les deux surfaces principales sont revêtues d'un revêtement antireflet selon l'invention et présente une valeur de $R_v$ totale (cumul de réflexion due aux deux faces) inférieure à 1,5%. Les moyens pour parvenir à de telles valeurs de $R_v$ sont bien connus de l'homme du métier.

Dans la présente demande, le "facteur de réflexion lumineux" est tel que défini dans la norme ISO 13666:1998, et mesuré conformément à la norme ISO 8980-4, c'est-à-dire qu'il s'agit de la moyenne pondérée de la réflexion spectrale sur l'ensemble du spectre visible entre 380 et 780 nm.

Avant la formation du précurseur du revêtement antibuée sur le revêtement comportant à sa surface des groupes silanols, par exemple un revêtement antireflet, il est courant de soumettre la surface de ce revêtement à un traitement d'activation physique ou chimique, destiné à augmenter l'adhésion du précurseur du revêtement antibuée. Ces traitements peuvent être choisis parmi ceux décrits précédemment pour l'activation du revêtement comprenant à sa surface des groupes silanols.

Selon l'invention, le revêtement comportant à sa surface des groupes silanols est directement en contact avec le revêtement précurseur d'un revêtement antibuée, qui va maintenant être décrit.

Par "précurseur d'un revêtement antibuée", on entend dans la présente demande un revêtement qui, s'il est appliqué à sa surface une solution liquide contenant un surfactant de façon à former un film, constitue une revêtement antibuée au sens de l'invention. L'ensemble constitué par le revêtement précurseur et le film de solution à base de surfactant constitue le revêtement antibuée proprement dit.

Le revêtement précurseur du revêtement antibuée est un revêtement ayant une épaisseur inférieure ou égale à 5 nm, de préférence de 4 nm ou moins, mieux de 3 nm ou moins et encore mieux de 2 nm ou moins, possédant un angle de contact statique avec l'eau supérieur à 10° et inférieur à 50°, qui est obtenu par greffage permanent d'au moins un composé organosilane possédant un groupe polyoxyalkylène et au moins un atome de silicium porteur d'au moins un groupe hydrolysable.

Selon un des modes de réalisation de l'invention, le revêtement est déposé par application d'une composition comprenant un hydrolysat du composé organosilane possédant un groupe polyoxyalkylène et au moins un atome de silicium porteur d'au moins un groupe hydrolysable.

Il est recommandé d'éviter une condensation des composés organosilane hydrolysés afin que ceux-ci puissent conserver un maximum de fonctions silanols libres de réagir afin de faciliter le greffage de ces composés à la surface de l'article d'optique et limiter la formation de prépolymères siloxanes avant greffage. C'est ce qui explique que l'épaisseur de composé organosilane déposée soit aussi faible.

Ainsi il est recommandé d'appliquer la composition assez rapidement après hydrolyse, typiquement moins de 2 heures, préférentiellement moins de 1 heure, mieux moins de 30 minutes après avoir procédé à l'hydrolyse (par ajout d'une solution aqueuse acide, typiquement de HCl).

De façon optimale, on applique la composition moins de 10 minutes, mieux encore moins de 5 minutes et préférentiellement moins de 1 minute après avoir procédé à l'hydrolyse

Il est préférable d'effectuer l'hydrolyse sans chauffage, à savoir typiquement à une température de 20 à 25 °C.

D'une manière générale, le dépôt de couches de quelques nm d'épaisseur nécessite d'utiliser des compositions très diluées, à très faible teneur d'extrait sec, ce qui ralentit les cinétiques de condensation.

Le composé organosilane utilisé est capable, grâce à son groupe réactif contenant du silicium, d'établir une liaison covalente avec les groupes silanols présents à la surface du revêtement sur lequel il est déposé.

Le composé organosilane de l'invention comprend une chaîne polyoxyalkylène fonctionnalisée à une seule extrémité ou à ses deux extrémités, de préférence à une seule extrémité, par un groupe comportant au moins un atome de silicium porteur d'au moins un groupe hydrolysable. Ce composé organosilane comprend de préférence un atome

de silicium porteur d'au moins deux groupes hydrolysables, de préférence trois groupes hydrolysables. De préférence, il ne comprend pas de groupe uréthane. Il s'agit préférentiellement d'un composé de formule :

$$R^1Y_mSi(X)_{3-m} \qquad (I)$$

dans laquelle les groupes Y, identiques ou différents, sont des groupes organiques monovalents liés au silicium par un atome de carbone, les groupes X, identiques ou différents, sont des groupes hydrolysables, $R^1$ est un groupe comprenant une fonction polyoxyalkylène, m est un entier égal à 0, 1 ou 2. De préférence m = 0.

Les groupes X sont préférentiellement choisis parmi les groupes alcoxy $-O-R^3$, en particulier alcoxy en $C_1$-$C_4$, acyloxy $-O-C(O)R^4$ où $R^4$ est un radical alkyle, préférentiellement en $C_1$-$C_6$, de préférence méthyle ou éthyle, halogènes tels que Cl, Br et I ou triméthylsiloxy $(CH_3)_3SiO$-, et les combinaisons de ces groupes. De préférence, les groupes X sont des groupes alcoxy, et en particulier méthoxy ou éthoxy, et mieux éthoxy.

Le groupe Y, présent lorsque m n'est pas nul, est de préférence un groupe hydrocarboné, saturé ou non, de préférence en $C_1$-$C_{10}$ et mieux en $C_1$-$C_4$, par exemple un groupe alkyle, tel que méthyle ou éthyle, un groupe vinyle, un groupe aryle, par exemple phényle, éventuellement substitué, notamment par un ou plusieurs groupes alkyle en $C_1$-$C_4$. De préférence Y représente le groupe méthyle.

Selon un mode de réalisation préféré, le composé de formule I comprend un groupe trialcoxysilyle tel qu'un groupe triéthoxysilyle ou triméthoxysilyle..

Le groupe polyoxyalkylène du composé organosilane (groupe $R^1$) comprend de préférence moins de 80 atomes de carbone, mieux moins de 60 atomes de carbone, et encore mieux moins de 50 atomes de carbone. Le groupe $R^1$ vérifie de préférence ces mêmes conditions.

Le groupe $R^1$ a généralement pour formule $-L-R^2$, où L est un groupe divalent lié à l'atome de silicium des composés de formule I ou II par un atome de carbone, et $R^2$ est un groupe comprenant un groupe polyoxyalkylène lié au groupe L par l'intermédiaire d'un atome d'oxygène, cet atome d'oxygène étant compris dans le groupe $R^2$. Des exemples non limitatifs de groupes L sont les groupes alkylène linéaires ou ramifiés, éventuellement substitués, cycloalkylène, arylène, carbonyle, amido, où des combinaisons de ces groupes comme les groupes cycloalkylènealkylène, biscycloalkylène, biscycloalkylèneatkylène, arylènealkylène, bisphénylène, bisphénylènealkylène, amido alkylène, dont un exemple est le groupe $CONH(CH_2)_3$, ou bien les groupes $-OCH_2CH(OH)CH_2$- et -NHC(O)-. les groupes L préférés sont les groupes alkylène, de préférence linéaire, ayant de préférence 10 atomes de carbone ou moins, mieux 5 atomes de carbone ou moins, par exemple les groupe éthylène et propylène.

Les groupes $R^2$ préférés comprennent un groupe polyoxyéthylène $-(CH_2CH_2O)_n$-, polyoxypropylène, ou des combinaisons de ces groupes.

Les organosilanes de formule I préférés sont des composés de formule II suivante :

$$Y_m(X)_{3-m}Si(CH_2)_{n'}-(L')_{m'}-(OR)_n-O-(L'')_{m''}-R' \qquad (II)$$

où R' est un atome d'hydrogène, un groupe acyle ou un groupe alkyle, linéaire ou ramifié, éventuellement substitué par un ou plusieurs groupes fonctionnels, et pouvant comporter en outre une ou plusieurs doubles liaisons, R est un groupe alkylène linéaire ou ramifié, de préférence linéaire, par exemple un groupe éthylène ou propylène, L' et L" sont des groupes divalents, X, Y et m sont tels que définis ci-dessus, n' est un entier allant de 1 à 10, de préférence de 1 à 5, n est un entier allant de 2 à 50, de préférence de 5 à 30, mieux de 5 à 15, m' est égal à 0 ou 1, de préférence 0, m" est égal à 0 ou 1, de préférence 0.

Les groupes L' et L", lorsqu'ils sont présents, peuvent être choisis parmi les groupes divalents L précédemment décrits et représentent de préférence le groupe $-OCH_2CH(OH)CH_2$- ou le groupe -NHC(O)-. Dans ce cas, les groupes $-OCH_2CH(OH)CH_2$- ou -NHC(O)- sont connectés aux groupes adjacents $(CH_2)_{n'}$ (dans le cas d'un groupe L') et R' (dans le cas d'un groupe L") par l'intermédiaire de leur atome d'oxygène (pour le groupe $-OCH_2CH(OH)CH_2$-) ou par l'intermédiaire de leur atome d'azote (pour le groupe -NHC(O)-).

Selon un mode de réalisation, m = 0 et les groupes hydrolysables X désignent des groupes méthoxy ou éthoxy. n' est de préférence égal à 3. Selon un autre mode de réalisation, R' désigne un groupe alkyle possédant moins de 5 atomes de carbone, de préférence le groupe méthyle. R' peut aussi désigner un groupe acyle aliphatique ou aromatique, notamment le groupe acétyle.

Enfin, R' peut désigner un groupe trialcoxysilylalkylène ou trihalogénosilylalkylène tel que le groupe $-(CH_2)_{n''}Si(R^5)_3$ où $R^5$ est un groupe hydrolysable tel que les groupes X définis précédemment et n" est un entier tel que le groupe n' défini précédemment. Un exemple d'un tel groupe R' est le groupe $-(CH_2)_3Si(OC_2H_5)_3$. Dans ce mode de réalisation, le composé organosilane comporte deux atomes de silicium porteurs d'au moins un groupe hydrolysable.

Selon des modes de réalisation préférés, n est égal à 3, ou bien varie de 6 à 9, de 9 à 12, de 21 à 24, ou de 25 à 30, de préférence de 6 à 9.

Comme exemples de composés de formule II, on peut citer les 2-[méthoxy(polyéthylèneoxy)propyl]triméthoxy-

silane de formules $CH_3O-(CH_2CH_2O)_{6-9}-(CH_2)_3Si(OCH_3)_3$ (III) et $CH_3O-(CH_2CH_2O)_{9-12}-(CH_2)_3Si(OCH_3)_3$ (IV), commercialisés par Gelest, Inc. ou ABCR, le composé de formule $CH_3O-(CH_2CH_2O)_3-(CH_2)_3Si(OCH_3)_3$ (VIII), les composés de formule $CH_3O-(CH_2CH_2O)_n-(CH_2)_3Si(OC_2H_5)_3$ où n= 21-24, les 2-[méthoxy(polyéthylèneoxy)propyl] trichlorosilanes, le 2-[acétoxy(polyéthylèneoxy)propyl] triméthoxysilane de formule $CH_3C(O)O-(CH_2CH_2O)_{6-9}-(CH_2)_3Si(OCH_3)_3$, le 2-[acétoxy(polyéthylèneoxy)propyl] triéthoxysilane de formule $CH_3C(O)O-(CH_2CH_2O)_{6-9}-(CH_2)_3Si(OC_2H_5)_3$, le 2-[hydroxy(polyéthylèneoxy)propyl]triméthoxysilane de formule $HO-(CH_2CH_2O)_{6-9}-(CH_2)_3Si(OCH_3)_3$, le 2-[hydroxy(polyéthylèneoxy)propyl]triéthoxysilane de formule $HO-(CH_2CH_2O)_{6-9}-(CH_2)_3Si(OC_2H_5)_3$, les composés de formules $HO-(CH_2CH_2O)_{8-12}-(CH_2)_3Si(OCH_3)_3$ et $HO-(CH_2CH_2O)_{8-12}-(CH_2)_3Si(OC_2H_5)_3$, l'oxyde de polypropylène-bis[(3-méthyldiméthoxysilyl)propyl], et les composés à deux têtes siloxanes tels que l'oxyde de polyéthylène-bis[(3-triéthoxysilylpropoxy)-2-hydroxypropoxy] de formule (V), l'oxyde de polyéthylène-bis[(N,N'-triéthoxysilylpropyl)-aminocarbonyl] de formule (VI) avec n = 10-15 et l'oxyde de polyéthylène-bis(triéthoxysilylpropyl) de formule (VII) :

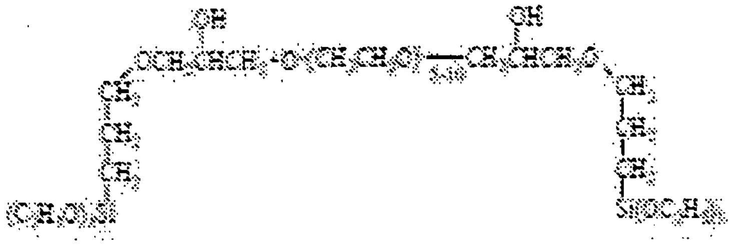

(V)

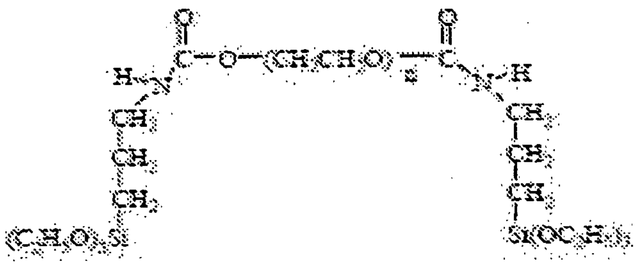

(VI)

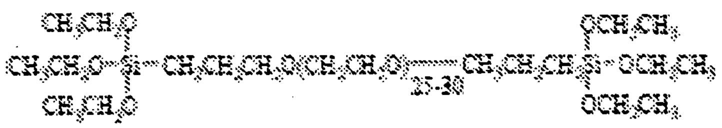

(VII)

Les composés de formule II préférés sont les [alcoxy(polyalkylènoxy)alkyl]trialcoxysilanes ou leurs analogues trihalogénés (m = m' = m" = 0, R' = alcoxy).

De préférence, le composé organosilane de l'invention ne possède pas d'atome de fluor. Typiquement, le taux massique de fluor dans le revêtement précurseur du revêtement antibuée est inférieur à 5 %, de préférence inférieur à 1 % en poids et mieux de 0 %.

De préférence, la masse molaire du composé organosilane selon l'invention va de 400 à 4000 g/mol, de préférence de 400 à 1500 g/mol, mieux de 400 à 1200 g/mol, et encore mieux de 400 à 1000 g/mol.

Il est naturellement possible de greffer un mélange de composés de formulé I ou II, par exemple un mélange de composés qui diffèrent par la longueur de leur chaîne polyoxyalkylène RO.

Selon un mode de réalisation de l'invention, le précurseur du revêtement antibuée comprend plus de 80 % en masse de composé organosilane selon l'invention, par rapport à la masse totale du précurseur du revêtement antibuée, de préférence plus de 90 %, mieux plus de 95 % et idéalement plus de 98 %. Selon un mode de réalisation, le précurseur de revêtement antibuée consiste en une couche dudit composé organosilane.

De préférence, le précurseur de revêtement antibuée de l'invention contient moins de 5 % en masse d'oxyde métallique ou de métalloïde (par exemple de silice ou d'alumine) par rapport à la masse totale du revêtement, mieux n'en comprend pas. Lorsque le composé organosilane utilisé pour la formation du revêtement antibuée est déposé sous vide, de préférence aucun oxyde métallique n'est co-évaporé avec lui, selon la technique de la co-évaporation d'au moins un composé organique et d'au moins un composé inorganique décrite dans la demande EP 1324078.

De préférence, le revêtement précurseur du revêtement antibuée ne contient pas d'agent de réticulation, ce qui signifie qu'il n'est de préférence pas formé à partir d'une composition contenant un agent de réticulation, par exemple le tétraéthoxysilane.

Le précurseur de revêtement antibuée de l'invention possède un angle de contact statique avec l'eau strictement supérieur à 10° et strictement inférieur à 50°, de préférence inférieur ou égal à 45°, mieux ≤ 40°, encore mieux ≤ 30° et idéalement ≤ 25°. Cet angle de contact va de préférence de 15° à 40°, mieux de 20° à 30°.

Le dépôt du composé organosilane à la surface du revêtement comportant des groupes silanols peut être réalisé selon des techniques habituelles, de préférence par dépôt en phase gazeuse ou en phase liquide, idéalement en phase gazeuse, par évaporation sous vide.

Lorsque le greffage est réalisé en phase gazeuse, par exemple par évaporation sous vide, il peut être suivi, si besoin est, d'une étape d'élimination du surplus du composé organosilane déposé de façon à ne conserver que le composé organosilane effectivement greffé à la surface du revêtement comportant des groupes silanols. Les molécules non greffées sont ainsi évacuées. Une telle étape d'élimination doit être effectuée notamment lorsque l'épaisseur de précurseur de revêtement antibuée initialement déposée est supérieure à 5 nm.

Cette étape d'élimination de l'excès de composé organosilane est toutefois dans certains cas inexistante, dans la mesure où il est possible de déposer le composé organosilane de façon à former une couche greffée, c'est-à-dire lorsqu'il est veillé à ce que l'épaisseur déposée ne dépasse pas quelques nanomètres. Le réglage des paramètres de dépôt pour parvenir à de telles épaisseurs est à la portée de l'homme du métier.

Néanmoins, il est préférable de former le revêtement précurseur du revêtement antibuée en déposant un excès de composé organosilane à la surface du revêtement comportant des groupes silanols et en éliminant l'excès de ce composé déposé mais non greffé. En effet, les inventeurs ont constaté que lorsque l'on forme directement une couche de composé organosilane greffé ayant une épaisseur inférieure ou égale à 5 nm, qui ne nécessite pas une élimination d'un excès de composé organosilane, on peut dans certains cas obtenir un revêtement précurseur de revêtement antibuée dont la surface ne possède pas une affinité suffisante vis-à-vis d'une solution liquide contenant au moins un tensioactif, ce qui conduirait à un revêtement ne possédant pas les propriétés antibuée recherchées.

De façon surprenante, ceci n'est pas observé lorsque le composé organosilane est déposé en excès, comme indiqué précédemment, et que cet excès est éliminé. L'épaisseur physique réelle de la couche de composé organosilane déposé en excès est de préférence inférieure ou égale à 20 nm.

L'élimination de l'excès de composé organosilane déposé peut être réalisée par rinçage (voie liquide) en utilisant par exemple une solution d'eau savonneuse et/ou par essuyage (à sec). De préférence, l'étape d'élimination comprend un rinçage suivi d'un essuyage.

Préférentiellement, le rinçage est effectué en nettoyant l'article avec de l'eau savonneuse (renfermant un tensioactif) au moyen d'une éponge. Ensuite on procède à un rinçage avec de l'eau désionisée, et optionnellement, la lentille est ensuite soumise à un essuyage pendant typiquement moins de 20 secondes, préférentiellement de 5 à 20 secondes, au moyen d'un tissu CEMOI™ ou Selvith™ imprégné d'alcool, typiquement de l'alcool isopropylique. On peut ensuite effectuer un nouveau rinçage à l'eau désionisée et essuyer avec un chiffon. L'ensemble de ces étapes peut s'effectuer manuellement ou être partiellement ou totalement automatisée.

L'étape d'élimination de l'excès de composé organosilane conduit à une couche de composé organosilane ayant une épaisseur de 5 nm ou moins. Le composé organosilane déposé à la surface de l'article d'optique forme donc une couche monomoléculaire ou quasi-monomoléculaire.

Le composé organosilane peut être au préalable dissous dans un solvant avant d'être évaporé, pour mieux contrôler la vitesse d'évaporation et de dépôt. L'épaisseur du film peut être contrôlée de cette façon grâce à cette dissolution et en ajustant la quantité de solution à évaporer.

Lorsque le greffage est réalisé par voie liquide, par exemple par trempage ou centrifugation, il n'est généralement pas nécessaire de procéder à une étape d'élimination de l'excès de composé organosilane déposé.

Le revêtement précurseur du revêtement antibuée selon l'invention possède une faible rugosité. Typiquement, dans le cas d'un composé organosilane déposé par phase vapeur, la rugosité Ra est inférieure à 2 nm, typiquement de l'ordre de 1 nm.

Ra (nm) est la valeur de la rugosité moyenne de la surface mesurée :

$$Ra = \frac{1}{LxLy} \cdot \int_0^{Ly} \int_0^{Lx} \left| f(x, y) \right| . dx . dy$$

Lx et Ly sont les dimensions de la surface mesurée, f(x,y) est la surface au plan centré.

Un revêtement antibuée temporaire selon l'invention est obtenu en déposant un film d'une solution liquide contenant au moins un tensioactif à la surface du revêtement précurseur du revêtement antibuée.

Cette solution fournit aux verres une protection temporaire contre la buée en créant une couche uniforme à leur surface qui aide à disperser les gouttelettes d'eau sur la surface du verre de sorte qu'elles ne forment pas de buée visible.

L'application de la solution de tensioactif peut être réalisée par toute technique connue, notamment par trempage ou centrifugation.

La solution de tensioactif est préférentiellement appliquée par dépôt d'une goutte de cette solution à la surface du précurseur du revêtement antibuée puis en l'étalant de façon à couvrir de préférence la totalité dudit revêtement précurseur.

La solution de tensioactif appliquée est généralement une solution aqueuse, contenant de préférence de 0,5 à 10%, mieux de 2 à 8% en masse de tensioactif. On utilise avantageusement une solution d'entretien commerciale contenant un tensioactif, disponible sous forme de spray ou de lingettes.

Une grande variété de tensioactifs peut être employée. Ceux-ci peuvent être ioniques (cationiques, anioniques ou amphotères) ou non ioniques, de préférence non ioniques ou anioniques. Cependant, un mélange de tensioactifs appartenant à ces différentes catégories est envisageable. Ces agents tensioactifs sont pour la plupart disponibles dans le commerce.

De préférence, on utilise un agent tensioactif comportant des groupes poly(oxyalkylène).

Comme exemples de surfactants non ioniques utilisables dans la présente invention, on peut citer les poly(alkylènoxy)alkyl-éthers, notamment les poly(éthylènoxy)alkyl-éthers, commercialisés par exemple par ICI sous la dénominations BRIJ®, les poly(alkylènoxy)alkyl-amines, les poly(alkylènoxy)alkyl-amides, les alcools gras polyéthoxylés, polypropoxylés ou polyglycérolés, les alpha-diols gras polyéthoxylés, polypropoxylés ou polyglycérolés, les alkylphénols gras polyéthoxylés, polypropoxylés ou polyglycérolés et les acides gras polyéthoxylés, polypropoxylés ou polyglycérolés, tous ayant une chaîne grasse comportant par exemple 8 à 18 atomes de carbone, le nombre de groupements oxyde d'éthylène ou oxyde de propylène pouvant aller notamment de 2 à 50 et le nombre de groupements glycérol pouvant aller notamment de 2 à 30, les diols acétylèniques éthoxylés, les composés du type copolymère à blocs comportant à la fois des blocs hydrophiles et des blocs hydrophobes (par exemple des blocs polyoxyéthylène et polyoxypropylène, respectivement), les copolymères poly(oxyéthylène)-poly(diméthylsiloxane) et les surfactants incorporant un groupe sorbitane.

Les surfactants anioniques préférés sont ceux comprenant un groupe acide sulfonique, on peut citer s alkylsulfosuccinates, les alkyléthersulfosuccinates, les alkylamidesulfosuccinates, les alkylsulfosuccinamates, les sels dibasiques d'acide polyoxyéthylène alkyl sulfosuccinique, les sels dibasiques d'acide alkyl sulfosuccinique, les alkylsulfoacétates, les sels d'hémi-esters d'acide sulfosuccinique, les alkylsulfates et aryl sulfates tels que le dodécylbenzène sulfonate de sodium et le dodécylsulfate de sodium, les sulfates d'alcool gras éthoxylés, les alkyléthersulfates, alkylamidoéthersulfates, alkylarylpolyéthersulfates, les alkylsulfonates, alkylphosphates, les alkylétherphosphates, alkylamidesulfonates, alkylarylsulfonates, $\alpha$-oléfine-sulfonates, les éthoxysulfates d'alcools secondaires, les acides éthers carboxyliques polyoxyalkylénés, les sulfates de monoglycéride, les sels de polyoxyéthylène alkyl éther de l'acide sulfurique, les sels d'esters de l'acide sulfurique, les N-acyltaurates tels que les sels de N-acylméthyltaurine, les sels d'acides monosufonique hydroxyalcanes ou les monosulfonates d'alcènes, le radical alkyle ou acyle de tous ces composés comportant de préférence de 12 à 20 atomes de carbone et l'éventuel groupe oxyalkylène de ces composés comportant de préférence de 2 à 50 unités monomères. Ces tensioactifs anioniques, et bien d'autres, utilisables dans la présente demande, sont décrits dans la demande EP 1418211 et le brevet US 5,997,621.

Comme agents tensioactifs cationiques utilisables dans la présente invention, on peut citer les sels d'amines grasses primaires, secondaires ou tertiaires, éventuellement polyoxyalkylénées, les sels d'ammonium quaternaire tels que les chlorures ou les bromures de tétraalkylammonium, d'alkylamidoalkyltrialkylammonium, de trialkylbenzylammonium, de trialkylhydroxyalkyl-ammonium ou d'alkylpyridinium, les dérivés d'imidazoline ou les oxydes d'amines à caractère cationique.

Selon un mode de réalisation, le tensioactif utilisé comprend un tensioactif fluoré. Dans ce cas, on utilise de préférence ceux comportant au moins un groupe fluoroalkyle ou polyfluoroalkyle et mieux ceux comportant au moins un groupe perfluoroalkyle.

Une solution de surfactant disponible dans le commerce pour conférer une propriété antibuée est la solution Clarity Defog it® de la société Nanofilm.

A la place d'une solution de tensioactif, il est possible d'utiliser des composés hydrophiles, plus particulièrement des composés sans propriétés tensioactives comportant au moins un groupe hydrophile, de préférence un groupe poly(oxyalkylène), mais les solutions de tensioactifs sont préférées et donnent de biens meilleurs résultats antibuée que des solutions à base de composés hydrophiles non tensioactifs. Le revêtement antibuée de l'invention présente de préférence un angle de contact statique avec l'eau inférieur ou égal à 10°, mieux inférieur ou égal à 5°.

Un revêtement antibuée immédiatement opérationnel est obtenu dès l'application de la solution de tensioactif, ce qui constitue l'un des principaux avantages de l'invention. Ainsi, il n'est pas nécessaire d'appliquer plusieurs fois une solution de tensioactif pour voir l'effet antibuée se manifester, comme c'est le cas de certains produits de l'art antérieur.

De plus, l'effet antibuée exercé par le revêtement antibuée est durable dans le temps, puisqu'il s'exerce pendant une durée pouvant aller de plusieurs jours à plusieurs semaines, ce qui est une nette amélioration par rapport aux revêtements antibuée connus. Cette durabilité est testée lors de sollicitations mécaniques correspondant à des essuyages répétés, dans une procédure décrite en partie expérimentale.

Le revêtement antibuée est temporaire mais facilement renouvelable, dans la mesure où il suffit de procéder à une nouvelle application de tensioactif lorsqu'il ne reste plus suffisamment de molécules d'agent tensioactif adsorbées à la surface du précurseur du revêtement antibuée. Ce dernier reste donc "activable" en toutes circonstances.

L'article d'optique selon l'invention ne possède pas de revêtement antisalissure, en particulier pas de revêtement antisalissure à base de silanes fluorés, mais il s'avère qu'il possède néanmoins une nettoyabilité satisfaisante. Sa facilité de nettoyage de traces de sébum est moins bonne que celle d'un revêtement antisalissure fluoré, mais meilleure que celle d'un revêtement antireflet nu, c'est-à-dire dépourvu de revêtement antisalissure.

Cependant, la facilité d'application de produits antibuée temporaires sur le précurseur de revêtement antibuée selon l'invention est plus grande que sur les revêtements antisalissure fluorés généralement utilisés. En outre, la durabilité de l'effet antibuée obtenu grâce à un produit antibuée temporaire est meilleure dans le cadre de l'invention que lorsque ce produit antibuée est appliqué sur un revêtement antisalissure.

L'invention concerne également un procédé de préparation d'un article d'optique, de préférence d'un verre de lunettes, tel que défini ci-dessus, comprenant :

a) fournir un substrat revêtu d'un revêtement comportant à sa surface des groupes silanols,

b) déposer sur ledit revêtement, de préférence par évaporation sous vide, au moins un composé organosilane possédant un groupe polyoxyalkylène et au moins un atome de silicium porteur d'au moins un groupe hydrolysable, de façon à obtenir une couche de composé organosilane greffé ayant une épaisseur inférieure ou égale à 5 nm, en éliminant éventuellement l'excès de composé organosilane déposé mais non greffé à la surface du revêtement comportant des groupes silanols, de façon à obtenir un angle de contact statique avec l'eau supérieur à 10° et inférieur à 50°.

Ce procédé peut en outre comprendre une étape supplémentaire de dépôt d'un film d'une solution liquide contenant au moins un tensioactif à la surface de la couche formée à l'étape b), donnant ainsi accès à un revêtement antibuée.

De préférence, le revêtement précurseur du revêtement antibuée n'est pas soumis à un chauffage prolongé avant l'application de ladite solution liquide contenant au moins un tensioactif. Un chauffage du revêtement précurseur à 50-60°C pendant plusieurs heures risquerait d'endommager l'article d'optique. Par ailleurs, lors du dépôt du précurseur du revêtement antibuée, il n'y a pas de nécessité de chauffer l'article d'optique.

L'invention concerne enfin un article d'optique, de préférence un verre de lunettes, comprenant un substrat revêtu d'un revêtement comportant à sa surface des groupes silanols, une partie de la surface dudit revêtement comportant à sa surface des groupes silanols étant en contact direct avec un revêtement précurseur d'un revêtement antibuée tel que défini précédemment, et une autre partie de la surface dudit revêtement comportant à sa surface des groupes silanols, de préférence le reste de sa surface, étant en contact direct avec, et adhérant à un revêtement hydrophobe et/ou oléophobe. Ces parties peuvent être continues ou discontinues.

Un tel article d'optique est utilisable notamment comme article de démonstration de propriétés antibuée, après application à sa surface d'une solution liquide contenant au moins un tensioactif et/ou un composé hydrophile sans propriétés tensioactives telle que définie précédemment, puis en exposant l'article à des conditions génératrices de buée (haleine, réfrigérateur, vapeur d'eau bouillante...) ou en soumettant sa surface à un ou plusieurs essuyage(s) avant une exposition aux conditions génératrices de buée.

L'article d'optique s'embue sur la partie de la surface recouverte de revêtement hydrophobe et/ou oléophobe et reste transparent dans la zone comportant le revêtement antibuée.

Les revêtements hydrophobes et/ou oléophobes, ou top-coats antisalissure, utilisables dans cet article d'optique sont décrits notamment dans la demande WO 2010/055261. Ils sont naturellement différents des revêtements antibuée de l'invention.

Les revêtements hydrophobes et/ou oléophobes utilisés ont de préférence une énergie de surface inférieure ou égale à 14 $mJ/m^2$, de préférence inférieure ou égale à 12 $mJ/m^2$, conformément à la méthode Owens Wendt décrite dans l'article référencé dans la demande WO2010/055261.

Un tel article d'optique peut être formé, sans que l'invention ne soit limitée à un tel procédé, en ayant recours à un article d'optique revêtu d'un revêtement comportant à sa surface des groupes silanols, au moins une partie de la surface dudit revêtement étant revêtue directement d'un revêtement hydrophobe et/ou oléophobe, en soumettant au moins une partie de ce revêtement hydrophobe et/ou oléophobe à un traitement permettant de l'éliminer, de façon à mettre à nu le revêtement sous-jacent comportant à sa surface des groupes silanols, puis en déposant sur la surface ainsi mise à nu au moins un composé organosilane selon l'invention, de façon à former un revêtement précurseur d'un

revêtement antibuée tel que décrit précédemment.

Tout moyen chimique ou physique permettant d'éliminer une partie du revêtement hydrophobe et/ou oléophobe peut être utilisé. On préférera employer un bombardement du revêtement par des ions argon à l'aide d'un canon à ions, mais on peut citer également un traitement par plasma sous vide, par décharge corona, un bombardement par un faisceau d'électrons ou un traitement UV, dans des conditions aisément déterminables par l'homme du métier. Si l'article d'optique comprend une couche électroconductrice, en particulier une couche conductrice conférant des propriétés antistatiques dans un revêtement antireflet, on utilise préférentiellement un bombardement ionique pour éviter un endommagement de l'article. Afin de limiter le traitement d'élimination à une partie seulement du revêtement hydrophobe et/ou oléophobe, on pourra utiliser un moyen de protection tel qu'un masque ou toute autre technique appropriée, disposé sur la surface de l'article à traiter ou éventuellement interposé entre la source et la surface à traiter dans le cas d'un traitement par des espèces énergétiques telles que des ions, des photons ou des électrons.

L'utilisation de masques en optique est classique, et est décrite notamment dans le brevet US 5,792,537.

En alternative, l'article d'optique précité peut être fabriqué à partir d'une lentille recouverte d'un revêtement selon l'invention, dont on met partiellement à nu la surface comportant des groupes silanols selon le procédé décrit précédemment, puis on vient déposer sur la surface mise à nu un revêtement hydrophobe et/ou oléophobe.

Les exemples suivants illustrent l'invention de façon plus détaillée mais non limitative.

EXEMPLES

1. <u>Matériaux et articles d'optique utilisés</u>

La silice est utilisée sous forme de granulés fournis par la société Optron Inc. Le composé organosilane utilisé dans les exemples pour former le précurseur du revêtement antibuée est le 2-[méthoxy(polyéthylèneoxy)propyl]triméthoxysilane possédant 6 à 9 unités oxyde d'éthylène (exemples 1-4, 6, 7), de formule (III) et de masse molaire 450-600 g/mol (CAS No. : 65994-07-2, Ref : SIM6492.7, fourni par la société Gelest, Inc.), ou le 2-[méthoxy(polyéthylèneoxy)propyl]triméthoxysilane possédant 3 unités oxyde d'éthylène (exemple 5), de formule (VIII).

Les composés organosilane comparatifs utilisés dans les exemples comparatifs C4 à C7 sont le 2-[méthoxy(polyéthylèneoxy)propyl]triéthoxysilane possédant 45 unités oxyde d'éthylène, de formule $CH_3O-(CH_2CH_2O)_{45}-(CH_2)_3Si(OC_2H_5)_3$ (IX), fourni par Interchim, ou le composé $HO(CH_2CH_2O)_{45}CONH(CH_2)_3Si(OCH_2CH_3)_3$ (X), fourni par ABCR (CAS No.: 37251-86-8). Le composé de formule (X) est le composé utilisé dans l'exemple comparatif 3 de la demandé JP 2005-281143.

Sauf indication contraire, les verres utilisés dans les exemples selon l'invention comprennent un substrat de lentille en polythiouréthane plan (PTU thermodurcissable commercialisé par Mitsui Toatsu Chemicals), d'indice de réfraction égal à 1,60, de 65 mm de diamètre, de puissance -2,00 dioptries et d'épaisseur 1,2 mm.

Ces verres sont traités sur les deux faces selon les procédés décrits ci-après, la face concave étant traitée avant la face convexe.

Ce substrat est revêtu d'un revêtement anti-abrasion et anti-rayures d'indice de réfraction égal à 1,60, ainsi que d'un revêtement antireflet monocouche d'environ 100 nm d'épaisseur et d'indice de réfraction égal à 1,40, obtenu par un procédé sol-gel (noté revêtement antireflet X) (obtenu par dépôt d'une composition à base d'alkoxysilane comprenant des particules colloïdales creuses, chauffée après dépôt pendant 3 heures à 100°C), ou bien d'un revêtement antireflet commercial tétracouche $ZrO_2/SiO_2/ZrO_2/SiO_2$ (noté revêtement antireflet Z) déposé sur le revêtement anti-abrasion par évaporation sous vide des matériaux dans l'ordre où ils ont été cités (épaisseurs respectives des couches : 27, 21, 80 et 81 nm).

Avant le dépôt du précurseur du revêtement antibuée, les verres comportant le revêtement antireflet X sont soumis à un traitement d'activation de surface par plasma (0,2 mBar, 200 mL $O_2$/min, 2 min à 500 W puis 5 min à 0 W).

Les verres comportant le revêtement antireflet Z ne subissent aucun traitement d'activation.

Dans les exemples 4-6, le verre utilisé comprend un substrat de lentille en matériau ORMA®, comportant un primaire antichoc de polyuréthane d'une épaisseur de l'ordre de 1 micron, lui-même revêtu d'un revêtement anti-abrasion d'une épaisseur de l'ordre de 3 microns en déposant et durcissant une composition telle que définie dans l'exemple 3 du brevet EP 614957, revêtu à son tour (sauf exemple 4) d'un revêtement antireflet à cinq couches $ZrO_2/SiO_2/ZrO_2/ITO/SiO_2$ (noté revêtement antireflet Y) déposé sur le revêtement anti-abrasion par évaporation sous vide des matériaux dans l'ordre où ils ont été cités (épaisseurs respectives des couches : 29, 23, 68, 7 et 85 nm). Une couche d'ITO est une couche électriquement conductrice d'oxyde d'indium dopé à l'étain ($In_2O_3$:Sn).

Avant le dépôt du précurseur du revêtement antibuée, les verres comportant le revêtement anti-abrasion sont soumis à un traitement d'activation de surface qui consiste à effectuer un bombardement ionique avec un gaz rare ou de l'oxygène, en l'occurrence un gaz rare qui est l'argon, sous vide, à une pression typiquement de $3,5.10^{-5}$ mbar.

Dans les exemples, le revêtement antireflet n'est soumis à aucun traitement d'activation avant le dépôt du précurseur du revêtement antibuée.

Le précurseur de revêtement antibuée a été déposé selon deux méthodes différentes :

2. Préparation de précurseurs de revêtements antibuée

a) Dépôt du précurseur du revêtement antibuée par voie liquide (Exemple 1)

1 g de composé siloxane de formule III est dilué dans 9 g d'isopropanol. 4 g de la solution résultante sont ensuite dilués dans 145 g d'isopropanol. La solution est agitée 2 minutes à température ambiante puis légèrement acidifiée par 0,2 g d'HCl 0,1 N et enfin déposée par dépôt centrifuge (3000 rpm / 30 sec / accélération : 2000 rpm/s; 50 % d'humidité) sur le revêtement antireflet X d'une lentille dont la surface a été activée comme indiqué ci-dessus. Le précurseur du revêtement antibuée est ensuite chauffé pendant 15 min à 75°C puis 3h à 100°C. A l'issue de cette étape, son épaisseur, évaluée par mesure ellipsométrique, est de 3 à 5 nm. Le composé siloxane de formule III n'ayant pas été déposé en excès, aucune étape d'élimination par essuyage ou lavage n'a été réalisée.

b) Dépôt du précurseurs du revêtement antibuée en phase vapeur (Exemples 2-6)

Dans l'exemple 2, le dépôt est réalisé sur le revêtement antireflet Z d'une lentille par évaporation sous vide en utilisant une source thermique à effet Joule. 150 μL de composé siloxane de formule III sont imbibés dans une mousse de nickel au sein d'une capsule de cuivre (épaisseur déposée : 10 nm, vitesse de dépôt : 0,25 nm/s, pression au démarrage du dépôt: $2.10^{-5}$ mBar).

A la fin de l'évaporation, la surface de chaque lentille est essuyée avec un tissu Cémoi sec jusqu'à ce que le surplus de composé siloxane de formule III déposé soit évacué. On observe alors une surface homogène. Le revêtement antibuée de l'exemple 2 a une épaisseur de 1-3 nm.

Le tissu Cémoi™ désigne un tissu fourni par le fournisseur Facol sous la référence Microfibre M8405 30x40.

Dans l'exemple 4, le dépôt est réalisé sur le revêtement anti-abrasion d'une lentille par évaporation sous vide en utilisant une source thermique à effet Joule. Le composé siloxane de formule III est versé dans une capsule de cuivre (en l'absence de matériau poreux), et cette capsule est déposée sur un support chauffant en tantale conducteur. Le dispositif d'évaporation est une machine SATIS 1200 DLF. La pression d'évaporation du composé siloxane de formule III varie généralement de $5.10^{-6}$ à $8.10^{-6}$ mbar. A la fin de l'évaporation, la surface de chaque lentille est rincée avec de l'eau savonneuse, éventuellement de l'alcool isopropylique, puis de l'eau désionisée et essuyée avec un tissu Cémoi™ sec afin que le surplus de composé siloxane de formule III déposé soit évacué.

Dans les exemples 5-6, le dépôt est réalisé sur le revêtement antireflet Y d'une lentille par évaporation sous vide selon un protocole similaire à celui de l'exemple 4, en utilisant un organosilane de formule III ou VIII, avec une vitesse d'évaporation programmée de 0,3 nm/s. On obtient une couche d'environ 12 nm d'épaisseur (avant élimination du surplus de composé siloxane), qui est éventuellement chauffée pendant 1 h à 60°C (seulement pour les exemples C6 et C7). L'excès de composé siloxane est ensuite éliminé de la façon décrite pour l'exemple 4.

c) Exemples comparatifs

Les verres de l'exemple comparatif C1 diffèrent de ceux de l'exemple 1 en ce qu'ils ne comprennent pas de précurseur de revêtement antibuée.

Les verres de l'exemple comparatif C2 diffèrent de ceux de l'exemple 2 en ce qu'ils ne comprennent pas dé précurseur de revêtement antibuée.

Les verres de l'exemple comparatif C3 diffèrent de ceux de l'exemple comparatif C2 en ce qu'un revêtement antisalissure de 2-3 nm d'épaisseur est formé sur le revêtement antireflet par évaporation sous vide à partir de la composition OPTOOL DSX®, commercialisée par Daikin Industries (résine fluorée comprenant des groupes perfluoropropylène répondant à la formule du brevet US 6,183,872).

Les verres des exemples comparatifs C4 à C7 possèdent un revêtement précurseur de revêtement antibuée formé à partir d'un composé organosilane non-conforme à l'invention, en raison d'un groupe polyoxyalkylène comprenant plus de 80 atomes de carbone.

d) Application d'une solution liquide contenant un surfactant (solution antibuée temporaire)

Les articles des exemples 1 A, 2A, C1A-C7A, 4A, 5A et 6A ont été obtenus en appliquant respectivement à la surface des articles des exemples 1, 2, C1-C3 et 4 une seule fois la solution Clarity® Defog It, contenant des tensioactifs (polyéthylène gycols, en solution dans l'isopropanol), commercialisée par la société Nanofilm, nommée simplement "Defog It" ci-dessous. Elle peut être appliquée sur les lentilles au moyen d'une lingette de marque "Defog It" contenant cette solution, ou en étalant directement le liquide antibuée de marque "Defog It".

e) Tests et résultats

Les performances des articles d'optique préparés et le rappel de leur constitution sont indiqués dans les tableaux 1, 2 et dans les paragraphes ci-dessous.

Tableau 1

| Exemple | 1 / 1A | 2 / 2A | C1 / C1A | C2 / C2A | C3 / C3A |
|---|---|---|---|---|---|
| Revêtement antireflet | X | Z | X | Z | Z |
| Revêtement précurseur antibuée | Oui | Oui | Non | Non | Non |
| Technique de dépôt du revêtement précurseur antibuée | Voie liquide | Evaporation | -- | -- | -- |
| Revêtement antisalissure | Non | Non | Non | Non | Oui |
| Angle de contact statique avec l'eau (°) avant application de Defog it | 25 (ex. 1) | 25 (ex. 2) | 102 (C1) | 42 (C2) | 118 (C3) |
| Nettoyabilité (note / 10) Avant application de Defog it | 5 (ex. 1) | 3 (ex. 2) | 0 (C1) | 2 (C2) | 9 (C3) |
| Test de l'haleine | N<br>(ex. 1, 1A) | N<br>(ex. 2, 2A) | Oui(C1)<br>N(C1A) | Oui(C2)<br>N(C2A) | Oui(C3)<br>N(C3A) |
| Durabilité dans le temps de l'effet antibuée après application de la solution Defog It | > 15 jours | > 15 jours | < 3 jours | < 24h | < 24h |
| Efficacité d'application de la lingette Defog It (nombre d'applications*) | 1 | 1 | 3 | > 5 | 5 |
| Efficacité d'application de la solution Defog It (nombre d'applications*) | 1 | 1 | >3 | >3 | >3 |
| Test Réfrigérateur | 1A(0) | 2A(0) | | C2(2) | |
| Test Vapeur chaude | 2A(0) | 2A(0) | C1(2)<br>C1A(2) | C2(2)<br>C2A(2) | |
| *A partir du verre comportant le revêtement précurseur antibuée (sans que celui-ci n'ait reçu aucune application antérieure de Defog it. | | | | | |

Les lentilles de l'exemple 4A présentent des propriétés antibuée comparables à celles des exemples 1 A et 2A.

e1) Evaluation des propriétés antibuée

Les propriétés antibuée peuvent être évaluées de trois manières : par le test "de l'haleine" (test qualitatif qui ne fait pas appel à une mesure d'acuité visuelle), par le test "de la vapeur chaude" et par le test "du réfrigérateur". Les tests de l'haleine et du réfrigérateur sont considéré comme générant une faible sollicitation à la buée. Le test de la vapeur chaude est considéré comme générant une forte sollicitation à la buée.

Test de l'haleine

Pour ce test, le testeur place le verre à évaluer à environ 2 cm de sa bouche. Le testeur souffle pendant 3 secondes son haleine sur la surface exposée du verre. Le testeur constate visuellement la présence d'un voile de condensation/distorsion ou non.

Oui. Présence de buée

N. Pas de buée : un tel verre est considéré comme présentant des propriétés antibuée à l'issue du test de l'haleine, c'est-à-dire qu'il supprime l'effet de voile dû à la buée (mais il ne constitue pas nécessairement un verre antibuée au sens de l'invention, car il peut présenter une distorsion visuelle ne permettant qu'une acuité visuelle <6/10$^{ème}$).

Test de la vapeur chaude

Avant le test, les verres sont placés 24 heures dans un environnement régulé en température (20-25°C) et à humidité de 50%.

Pour le test, les verres sont placés 15 secondes au dessus d'un récipient chauffé contenant de l'eau à 55°C. Immédiatement après, une échelle d'acuité visuelle située à 5 m est observée à travers le verre testé. L'observateur évalue l'acuité visuelle en fonction du temps et suivant les critères suivants :

0. Pas de buée, pas de distorsion visuelle (acuité visuelle = $10/10^{ème}$)
1. Buée et/ou distorsion visuelle permettant une acuité visuelle > $6/10^{ème}$
2. Buée et/ou distorsion visuelle permettant une acuité visuelle < $6/10^{ème}$

Concrètement, pour obtenir la note 0 ou 1, un porteur ayant une vision de 10/10 et ayant le verre placé devant son oeil doit être capable de distinguer l'orientation des lettres "E" sur la ligne 6/10 du tableau Optotype de Snellen placé à 5 mètres.

Ce test permet de simuler les conditions de vie courante où un porteur place son visage au dessus de son thé, café ou d'une casserole d'eau bouillante.

Test du réfrigérateur

Pour ce test, les verres sont placés dans une boite fermée hermétiquement et contenant un desséchant (gel de silice). Les boites sont elles-même placées au moins 24h dans un réfrigérateur à 4°C. Après ce laps de temps, les boites sont retirées du réfrigérateur et les verres sont immédiatement testés. Ces derniers sont placés dans une atmosphère à 45-50 % d'humidité et à 20-25°C. Une échelle d'acuité visuelle située à 4 m est observée à travers le verre. L'observateur évalue l'acuité visuelle en fonction du temps et suivant les même critères que le test de la vapeur chaude (notes 0, 1 ou 2).

Ce test permet de simuler les conditions de vie courante où un porteur part d'un endroit froid et sec et rentre dans un endroit chaud et humide.

Résultats des tests d'évaluation des propriétés antibuée

Les résultats du test de la vapeur chaude sont présentés sur la figure 1. On constate que seuls les verres des exemples 1A et 2A constituent des verres antibuée au sens de l'invention. Ils sont de plus immédiatement opérationnels. Les verres dépourvus de revêtement de surface hydrophile (exemples C2 et C3) et les verres équipés d'un revêtement précurseur de revêtement antibuée ne constituent pas des verres antibuée au sens de l'invention, car ils présentent une distorsion visuelle ne permettant pas une une acuité visuelle > $6/10^{ème}$ après exposition à la vapeur chaude. Néanmoins, les verres des exemples 1 et 2 présentent des propriétés antibuée dans le cadre du test de l'haleine.

Tous les verres non antibuée finissent par conduire, au bout d'un certain temps, à une acuité visuelle de 10/10, du fait de l'évaporation de la vapeur d'eau.

e2) Evaluation des propriétés de facilité de nettoyage (Nettoyabilité)

La facilité de nettoyage (nettoyabilité) de la surface d'un verre, sans dépôt de solution liquide contenant le surfactant a été évaluée en déposant à la surface du verre une trace de doigt à l'aide d'un pochoir et en essuyant cette trace avec un tissu TWILLX 1622. Les verres sont observés sur un fond noir et classé par le testeur du plus facile à nettoyer au moins facile à nettoyer. On ajoute à ce classement une note donnée par le testeur allant de 0, difficile à nettoyer à 10, très facile à nettoyer. Ce test permet de simuler les conditions de vie courante où un porteur nettoie les traces de doigt présentes sur ses verres avec un chiffon.

Les verres testés et les résultats sont présentés dans le tableau 1 et font apparaître que le verre le plus facile à nettoyer est naturellement celui possédant un revêtement antisalissure fluoré (exemple C3). Les verres comportant un précurseur de revêtement antibuée selon l'invention (exemples 1 et 2) sont plus faciles à nettoyer que ceux qui n'en comportent pas, ou équivalents à ceux (exemples C1 et C2), possédant un revêtement antireflet non revêtu.

e3) Evaluation de l'efficacité de l'application des produits antibuée temporaires

Des dépôts successifs de produit antibuée temporaire (solution ou lingette) sont réalisés sur les verres testés (Ex 1, 2, 4, C1, C2, C3) jusqu'à ce qu'aucune buée ni distorsion n'apparaisse avec le test de la vapeur chaude décrit ci-dessus, (effet antibuée parfait). L'effet recherché est un niveau de performance conduisant à un verre ne présentant

ni buée ni distorsion. Le nombre d'applications nécessaires pour parvenir à ce niveau de performance est indiqué dans le tableau 1.

Utilisation de la lingette Defog It : Les verres sont essuyés avec la lingette en effectuant un mouvement en spirale du centre vers le bord avec la lingette Defog It sur chaque face. Ceci correspond à une application. Le nombre d'applications a été limité à 5.

Utilisation de la solution Defog It : Deux gouttes de solution Defog It sont déposées sur chaque face du verre et sont essuyées en effectuant un mouvement en spirale du centre vers le bord avec un chiffon Cémoi. Ceci correspond à une application. Le nombre d'applications a été limité à 3.

Les résultats sont présentés dans le tableau 1 et permettent de constater qu'une seule application de produit antibuée temporaire est nécessaire sur un revêtement précurseur de revêtement antibuée selon l'invention pour obtenir un revêtement antibuée, ce qui simplifie l'utilisation des solutions antibuée temporaires. Les autres surfaces nécessitent plusieurs applications de solution antibuée pour éventuellement espérer parvenir au même niveau de performance antibuée. Grâce à l'invention, la surface du revêtement comportant des groupes silanols a en quelque sorte été rendue compatible avec un tensioactif grâce au greffage d'un composé organosilane selon l'invention.

Les inventeurs pensent que cette facilité d'application ne s'explique pas uniquement par les propriétés hydrophiles des surfaces des précurseurs des revêtements antibuée, mais également grâce à la nature chimique du composé organosilane de formule III.

e4) Durabilité de l'effet antibuée après sollicitation mécanique (après application de la solution Defog It)

La durabilité sous sollicitation mécanique (essuyage) de l'effet antibuée apporté par une solution antibuée temporaire appliquée au moyen d'une lingette Defog It a été évaluée de la façon suivante.

Le dépôt de la solution antibuée temporaire est réalisé autant de fois que nécessaire pour qu'à l'instant initial, tous les verres soient considérés comme antibuée à l'issue du test de la vapeur chaude décrit ci-dessus. Les verres sont ensuite essuyés avec un chiffon Cémoi et de nouveau soumis au test de la vapeur chaude. (Les verres sont essuyés lorsque le film d'eau dû à la buée a disparu. Si on essuie les verres alors que le film d'eau est toujours présent, on retire partiellement la solution antibuée).

Un essuyage correspond à deux rotations très appuyées d'un chiffon Cémoi sur la surface du verre. Les notes (0, 1 ou 2) correspondent au niveau de buée à la sortie du deuxième test à la vapeur chaude, après le nombre correspondant d'essuyages.

Les résultats des tests de durabilité sont présentés dans le tableau 2.

| Nombre d'essuyages | Exemple 1 Note antibuée | Exemple C1 Note antibuée | Exemple C3 Note antibuée |
|---|---|---|---|
| | 0 | 0 | 2 |
| 2 | 0 | 0 | |
| 3 | 0 | 0 | |
| 4 | 0 | 0 | |
| 5 | 0 | 1 | |
| 6 | 0 | 2 | |
| 10 | 1 | | |

Sur surface hydrophobe (exemple C3), un essuyage suffit à détériorer complètement les propriétés antibuée apportées par la solution temporaire Defog It.

Sur surface plus hydrophile (surface du revêtement antireflet de l'exemple C1), 5 essuyages sont nécessaires pour commencer à observer une détérioration des propriétés antibuée apportées par la solution temporaire Defog It.

Sur la surface d'un revêtement antibuée conforme à l'invention, 10 essuyages sont nécessaires pour commencer à observer une détérioration des propriétés antibuée apportées par la solution temporaire Defog It.

Un revêtement antibuée selon l'invention permet donc d'améliorer significativement la durabilité de la propriété antibuée apportée par une solution antibuée temporaire vis-à-vis d'un essuyage mécanique.

e5) Durabilité dans le temps de l'effet antibuée (après application de la solution Defog It)

La durabilité dans le temps de l'effet antibuée après dépôt de la solution temporaire Defog It a été évaluée, cette fois-ci sans sollicitation mécanique sur le verre après dépôt. Le verre est conservé à température et humidité

ambiante (~20-25°C, humidité relative ~30%). Le dépôt de la solution antibuée est réalisé autant de fois que nécessaire pour qu'à l'instant initial, tous les verres soient considérés comme antibuée à l'issue du test de l'haleine. L'évolution de l'effet antibuée est alors testée régulièrement par le test de l'haleine. Le tableau 1 indique la durée après application de la solution antibuée à partir de laquelle le verre n'est plus considéré comme présentant des propriétés antibuée à l'issue du test de l'haleine. Les tests ont été arrêtés au bout de 15 jours.

On constate que les surfaces des précurseurs de revêtements antibuée selon l'invention conduisent à une durabilité de l'effet antibuée apporté par la solution temporaire supérieure à 15 jours, ce qui est bien meilleur que les autres surfaces testées. Les inventeurs pensent que cette durabilité ne s'explique pas uniquement par les propriétés hydrophiles des surfaces des précurseurs des revêtements antibuée, mais également grâce à la nature chimique du composé organosilane de formule III.

e6) Angle de contact du revêtement précurseur du revêtement antibuée (Tableaux 1 et 4)

Les mesures sont effectuées sur un goniomètre Digidrop de la société GBX, à partir d'échantillons sur lesquels l'excès de composé organosilane déposé a été éliminé. 4 μL d'eau sont déposés automatiquement sur la surface de l'échantillon à étudier, puis l'angle de contact est mesuré. Les résultats sont présentés dans le tableau 1.

e7) Propriétés antireflet

Les spectres de réflexion de verres ont été réalisés avant et après dépôt de la solution temporaire Defog It. Chacun des verres présente des propriétés antibuée à l'issue du test de l'haleine après application de cette solution.

Le tableau 3 ci-dessous présente les variations observées sur les spectres de réflexion après dépôt de la solution temporaire Defog it.

| Exemple | Rv% Avant dépôt de la solution Defog it | Rv% après dépôt de la solution Defog it | ΔRv% |
|---|---|---|---|
| 1 / 1A | 1,45 | **1.92** | 0,47 |
| 2 / 2A | 0,72 | **0.44** | -0,28 |
| C2 / C2A | 0,77 | **0.48** | -0,29 |
| C3 / C3A | 0,50 | **0.46** | -0,04 |

Les articles résultant d'une modification de leur surface par greffage de l'organosilane de formule III (avant dépôt de la solution tensioactive) conservent des propriétés antireflet correspondant aux critères de l'industrie ophtalmique.

De plus, tous les verres testés conservent leurs propriétés antireflet après dépôt de la solution antibuée temporaire.

4. Exemple 3

Dans cet exemple, un substrat en silicium (wafer) a été utilisé plutôt qu'une lentille afin de pouvoir mesurer avec une plus grande précision les épaisseurs des couches déposées.

L'article d'optique utilisé dans cet exemple comprend un substrat en silicium recouvert d'une couche de silice de 50 nm d'épaisseur déposée en phase vapeur (épaisseur programmée : 140 nm, vitesse de dépôt programmée : 3 nm/s). Cette couche de silice possède après 3 jours de son dépôt un angle de contact statique avec l'eau de 33°, évoluant jusqu'à 43 ° en 2-3 mois.

Le précurseur du revêtement antibuée est déposé sur cette couche de silice par dépôt en phase vapeur du composé siloxane de formule III dans les mêmes conditions que l'exemple 2, ce qui conduit, avant élimination du surplus de composé organosilane, à une couche de 10 nm d'épaisseur présentant à t = 3 jours un angle de contact statique avec l'eau de 10°.

A la fin de l'évaporation, la surface de l'article est lavée à l'eau savonneuse et essuyée avec un tissu Cémoi sec. On obtient alors un revêtement ayant une épaisseur de 1-3 nm et une surface homogène, et présentant un angle de contact statique avec l'eau de 39°.

Après application d'une solution temporaire "Defog It" contenant un surfactant, on obtient un revêtement antibuée présentant un angle de contact statique avec l'eau inférieur à 5°.

La durabilité du revêtement antibuée a été évaluée en réalisant 50 essuyages à sec de la surface de l'article d'optique au moyen d'un chiffon Cémoi (50 aller-retour). Après cette opération, l'article présente un angle de contact statique avec l'eau inférieur à 3°, ce qui montre que la solution temporaire "Defog It" est encore présente à sa surface.

Dans cet exemple, les épaisseurs ont été déterminées par ellipsométrie monolongueur d'onde en considérant que l'indice de réfraction global de la bicouche silice / précurseur du revêtement antibuée est égal à 1,45.

5. Exemples 5-6 et exemples comparatifs C4-C7 : Tests et résultats

Les performances des articles d'optique préparés dans ces exemples et le rappel de leur constitution sont indiqués dans le tableau 4 et dans les paragraphes ci-dessous.

Tableau 4

| Exemple | 5 / 5A | 6 / 6A | C4 / C4A | C5 / C5A | C6 / C6A | C7 / C7A |
|---|---|---|---|---|---|---|
| Revêtement antireflet | Y | Y | Y | Y | Y | Y |
| Revêtement précurseur antibuée | Oui Composé VIII | Oui Composé III | Oui Composé IX | Oui Composé X | Oui Composé IX | Oui Composé X |
| Technique de dépôt du revêtement précurseur antibuée | Evaporation | Evaporation | Evaporation | Evaporation | Evaporation | Evaporation |
| Séchage 1h à 60°C du revêtement précurseur antibuée | Non | Non | Non | Non | Oui | Oui |
| Revêtement antisalissure | Non | Non | Non | Non | Non | Non |
| Angle de contact statique avec l'eau (°) avant application de Defog it | 41 (ex. 5) | 36 (ex. 6) | 34 (ex. C4) | 31 (ex. C5) | 32 (ex. C6) | 29 (ex. C7) |
| Note antibuée après 0 essuyage* | A | A | A | A | A | A |
| Note antibuée après 2 essuyages* | A | A | A | C | C | B |
| Note antibuée après 5 essuyages* | A | A | B | C | C | B ou C |
| Note antibuée après 10 essuyages* | A ou C | A | C | C | C | C |
| Note antibuée après 20 essuyages* | C | B | C | C | C | C |
| *A partir du verre comportant le revêtement antibuée (après application du surfactant). Le nombre d'essuyages indiqué est un nombre cumulé. | | | | | | |

Durabilité de l'effet antibuée après sollicitation mécanique (après application de la solution Defog It)

Ce test permet d'évaluer la résistance à l'essuyage de la solution antibuée temporaire à la surface des verres.

Il est réalisé sur deux échantillons de chaque verre.

Le dépôt de la solution antibuée temporaire a été réalisé de façon à ce qu'à l'instant initial, tous les verres soient considérés comme antibuée à l'issue du test de la vapeur chaude décrit ci-dessus.

Après chaque test de la vapeur chaude, les verres doivent être séchés à température ambiante, pour que le film d'eau dû à la buée ait disparu. En effet, si l'on essuie les verres alors que le film d'eau est toujours présent, on retire partiellement la solution antibuée.

Les verres sont ensuite essuyés manuellement à sec avec un chiffon Cémoi (2 essuyages) et soumis une seconde fois au test de la vapeur chaude, puis séchés comme décrit précédemment. Un essuyage correspond à deux rotations très appuyées d'un chiffon Cémoi sur la surface du verre.

Les verres sont ensuite essuyés manuellement à sec avec un chiffon Cémoi (3 essuyages supplémentaires) et soumis une troisième fois au test de la vapeur chaude, ce qui permet l'attribution de la note antibuée après 5 essuyages, puis séchés comme décrit précédemment. Ce cycle est répété de façon à pouvoir attribuer une note antibuée après 10 et 20 essuyages cumulés, en réalisant une série de 5 puis une série de 10 essuyages supplémentaires, séparés par une étape de séchage.

Les notes antibuée (A, B, C ou D) correspondent au niveau de buée à l'issue de chaque test à la vapeur chaude, après le nombre correspondant d'essuyages (nombre cumulé) :

A : Film d'eau homogène (acuité 10/10)
B : Distorsion visuelle acceptable par le porteur
C : Distorsion visuelle inacceptable par le porteur (film d'eau hétérogène)
D : Voile blanc totalement diffusant, fine gouttes d'eau.

Les verres sont considérés comme ayant passé avec succès le test de durabilité s'ils obtiennent la note A ou B.

Résultats

Il apparaît clairement que les composés organosilanes selon l'invention, de formules III et VIII, permettent de former des revêtements antibuée plus performants que les composés comparatifs de formules IX et X utilisés dans l'art antérieur, qui possèdent une chaîne polyoxyalkylène trop longue. Ce résultat est surprenant, dans la mesure où les composés IX et X permettent de former des revêtements plus hydrophiles que les composés III et VIII, et que l'on s'attend généralement à obtenir de meilleures propriétés antibuée en augmentant l'hydrophilie d'un revêtement. Le composé III est par ailleurs sensiblement plus performant que le composé VIII.

En outre, le post-traitement thermique d'une heure à 60 °C tel que réalisé dans les exemples comparatifs C6 et C7, conformément à l'enseignement de la demande JP 2005-281143, a peu d'influence sur les performances du revêtement antibuée.

6. Exemple 7

Un verre en matériau ORMA® comportant sur ses faces concave et convexe les mêmes revêtements fonctionnels que ceux des exemples 5-6, à savoir un primaire antichoc de polyuréthane, un revêtement anti-abrasion et le revêtement antireflet Y ($ZrO_2/SiO_2/ZrO_2$/ITO/$SiO_2$) est revêtu par évaporation sous vide sur ses deux faces d'une couche de revêtement antisalissure de 2 nm d'épaisseur à base du matériau Optool DSX® de la société Daikin Industries.

Un masque, réalisé par découpe laser d'un film plastique de façon à former un motif, est alors disposé sur sa face convexe. La face convexe partiellement protégée par le masque est ensuite exposée à un bombardement par des ions argon à l'aide d'un canon à ions, qui a pour effet d'éliminer le revêtement antisalissure dans la zone non protégée par le masque, ayant la forme du motif, et de mettre à nu dans cette zone la couche externe du revêtement antireflet Y, qui est une couche de silice.

On procède ensuite dans la zone mise à nu au dépôt du précurseur du revêtement antibuée en phase vapeur de la même façon que pour les exemples 5-6, en utilisant l'organosilane de formule III, et en maintenant le masque sur la surface du verre pendant le dépôt, de façon à former une couche greffée de revêtement précurseur de revêtement antibuée de 2 à 3 nm d'épaisseur.

Afin de procéder à la démonstration des propriétés antibuée du verre, on applique sur leur surface convexe quelques gouttes de la solution Clarity® Defog It, puis on essuie cette surface avec un chiffon Cémoi. Au bout de quelques essuyages, la solution de tensioactif a été complètement éliminée de la surface du verre recouverte du revêtement antisalissure, alors qu'elle est toujours présente dans la zone correspondant au motif.

Ceci peut être vérifié visuellement en soumettant le verre ainsi préparé au test d'haleine, au test du réfrigérateur ou au test de la vapeur chaude, la buée se formant sur la totalité de la surface du verre à l'exception de la zone correspondant au motif, qui est revêtue d'un revêtement antibuée selon l'invention.

## Revendications

1. Verre de lunettes comprenant un substrat revêtu d'un revêtement comportant à sa surface des groupes silanols et, en contact direct avec ce revêtement, un revêtement précurseur d'un revêtement antibuée, le revêtement précurseur du revêtement antibuée étant obtenu par greffage d'au moins un composé organosilane possédant :

    - un groupe polyoxyalkylène comprenant moins de 80 atomes de carbone, et
    - au moins un atome de silicium porteur d'au moins un groupe hydrolysable, **caractérisé en ce que** le revêtement précurseur du revêtement antibuée :

        - possède un angle de contact statique avec l'eau supérieur à 10° et inférieur à 50°,
        - a une épaisseur inférieure ou égale à 5 nm.

2. Verre de lunettes selon la revendication 1, **caractérisé en ce que** le revêtement précurseur du revêtement antibuée est revêtu d'un film d'une solution liquide contenant au moins un tensioactif et/ou un composé hydrophile sans propriétés tensioactives, de préférence un tensioactif comportant des groupes poly(oxyalkylène).

3. Verre de lunettes selon la revendication 2, **caractérisé en ce qu'**il présente un angle de contact statique avec l'eau inférieur ou égal à 10°, mieux inférieur ou égal à 5°.

4. Verre de lunettes selon l'une quelconque des revendications 1 à 3, **caractérisé en ce que** le revêtement comportant à sa surface des groupes silanols est un revêtement antireflet ou une couche à base de silice déposée sur un revêtement anti-abrasion.

5. Verre de lunettes selon l'une quelconque des revendications 1 à 4, **caractérisé en ce que** le composé organosilane est un composé de formule :

    $$R^1Y_mSi(X)_{3-m} \qquad (I)$$

    dans laquelle les groupes Y, identiques ou différents, sont des groupes organiques monovalents liés au silicium par un atome de carbone, les groupes X, identiques ou différents, sont des groupes hydrolysables, $R^1$ est un groupe comprenant une fonction polyoxyalkylène, m est un entier égal à 0, 1 ou 2.

6. Verre de lunettes selon la revendication 5, **caractérisé en ce que** le composé organosilane est un composé de formule :

    $$Y_m(X)_{3-m}Si(CH_2)_{n'}\text{-}(L')_{m'}\text{-}(OR)_n\text{-}O\text{-}(L'')_{m''}\text{-}R' \qquad (II)$$

    où R' est un atome d'hydrogène, un groupe acyle ou un groupe alkyle, linéaire ou ramifié, optionnellement substitué par un ou plusieurs groupes fonctionnels, et comportant optionnellement une ou plusieurs doubles liaisons, $(OR)_n$ est un groupe polyoxyalkylène tel que R est un groupe alkylène linéaire ou ramifié, de préférence linéaire, L' et L" sont des groupes divalents, X, Y et m sont tels que définis dans la revendication 5, n' est un entier allant de 1 à 10, n est un entier allant de 2 à 30, m' est égal à 0 ou 1, de préférence 0, m" est égal à 0 ou 1.

7. Verre de lunettes selon la revendication 6, **caractérisé en ce que** R' est un groupe alkyle, et de préférence m" = 0.

8. Verre de lunettes selon l'une quelconque des revendications 6 ou 7, **caractérisé en ce que** le composé organosilane est un composé de formule (II) dans lequel n = 5-30, de préférence n = 5-15, mieux n = 6-9.

9. Verre de lunettes selon l'une quelconque des revendications précédentes, **caractérisé en ce que** le composé organosilane est un [alcoxy(polyalkylènoxy)alkyl]trialcoxysilane, de préférence un 2-[méthoxy(polyéthylèneoxy)propyl]triméthoxysilane, mieux un composé de formule $CH_3O\text{-}(CH_2CH_2O)_{6\text{-}9}\text{-}(CH_2)_3Si(OCH_3)_3$ ou $CH_3O\text{-}(CH_2CH_2O)_{9\text{-}12}\text{-}(CH_2)_3Si(OCH_3)_3$.

10. Verre de lunettes selon l'une quelconque des revendications précédentes, **caractérisé en ce que** le composé organosilane ne possède pas d'atome de fluor.

11. Verre de lunettes selon l'une quelconque des revendications précédentes, **caractérisé en ce que** le groupe polyoxyalkylène du composé organosilane comprend moins de 60 atomes de carbone, de préférence moins de 50 atomes de carbone.

**12.** Procédé de préparation d'un verre de lunettes selon l'une quelconque des revendications précédentes, comprenant :

- fournir un substrat revêtu d'un revêtement comportant à sa surface des groupes silanols,
- déposer sur ledit revêtement au moins un composé organosilane possédant un groupe polyoxyalkylène comprenant moins de 80 atomes de carbone et au moins un atome de silicium porteur d'au moins un groupe hydrolysable, de façon à obtenir une couche de composé organosilane greffé ayant une épaisseur inférieure ou égale à 5 nm, dont la surface possède un angle de contact statique avec l'eau supérieur à 10° et inférieur à 50°.

**13.** Procédé selon la revendication 12, **caractérisé en ce qu'**une couche de composé organosilane greffé ayant une épaisseur inférieure ou égale à 5 nm est obtenue en éliminant l'excès de composé organosilane déposé mais non greffé à la surface du revêtement comportant des groupes silanols.

**14.** Procédé selon la revendication 12 ou 13, **caractérisé en ce que** ledit composé organosilane est déposé par évaporation sous vide sur ledit revêtement comportant à sa surface des groupes silanols.

**15.** Article d'optique comprenant un substrat revêtu d'un revêtement comportant à sa surface des groupes silanols, une partie de la surface dudit revêtement comportant à sa surface des groupes silanols étant en contact direct avec, et adhérant à, un revêtement hydrophobe et/ou oléophobe, **caractérisé en ce qu'**une autre partie de la surface dudit revêtement comportant à sa surface des groupes silanols est en contact direct avec un revêtement précurseur d'un revêtement antibuée tel que défini dans l'une quelconque des revendications 1 à 11.

**Patentansprüche**

**1.** Brillenglas, umfassend ein Substrat, das mit einer Beschichtung beschichtet ist, die an ihrer Oberfläche Silanolgruppen aufweist, und in direktem Kontakt mit dieser Beschichtung eine Vorläuferbeschichtung für eine Antibeschlagbeschichtung, wobei die Vorläuferbeschichtung für die Antibeschlagbeschichtung durch Aufpfropfen mindestens einer Organosilanverbindung mit:

- einer Polyoxyalkylengruppe mit weniger als 80 Kohlenstoffatomen und
- mindestens einem Siliciumatom, das mindestens eine hydrolysierbare Gruppe trägt,

erhalten wird, **dadurch gekennzeichnet, dass** die Vorläuferbeschichtung für die Antibeschlagbeschichtung

- einen statischen Kontaktwinkel mit Wasser von mehr als 10° und weniger als 50° aufweist,
- eine Dicke kleiner gleich 5 nm aufweist.

**2.** Brillenglas nach Anspruch 1, **dadurch gekennzeichnet, dass** die Vorläuferbeschichtung für die Antibeschlagbeschichtung mit einem Film aus einer flüssigen Lösung, die mindestens ein Tensid und/oder eine hydrophile Verbindung ohne Tensideigenschaften, vorzugsweise ein Tensid mit Poly(oxyalkylen)gruppen, enthält, beschichtet ist.

**3.** Brillenglas nach Anspruch 2, **dadurch gekennzeichnet, dass** es einen statischen Kontaktwinkel mit Wasser kleiner gleich 10° und noch besser kleiner gleich 5° aufweist.

**4.** Brillenglas nach einem der Ansprüche 1 bis 3, **dadurch gekennzeichnet, dass** es sich bei der Beschichtung, die an ihrer Oberfläche Silanolgruppen aufweist, um eine Antireflexbeschichtung oder eine auf einer Antiabriebbeschichtung aufgebrachte Schicht auf Basis von Siliciumdioxid handelt.

**5.** Brillenglas nach einem der Ansprüche 1 bis 4, **dadurch gekennzeichnet, dass** es sich bei der Organosilanverbindung um eine Verbindung der Formel:

$$R^1Y_mSi(X)_{3-m} \qquad (I)$$

handelt, in der die Gruppen Y gleich oder verschieden sind und für einwertige organische Gruppen, die über ein Kohlenstoffatom an das Silicium gebunden sind, stehen, die Gruppen X gleich oder verschieden sind und für hy-

drolysierbare Gruppen stehen, $R^1$ für eine Gruppe mit einer Polyoxyalkylenfunktion steht und m für eine ganze Zahl mit einem Wert von 0, 1 oder 2 steht.

6. Brillenglas nach Anspruch 5, **dadurch gekennzeichnet, dass** es sich bei der Organosilanverbindung um eine Verbindung der Formel:

$$Y_m(X)_{3-m}Si(CH_2)_{n'}\text{-}(L')_{m'}\text{-}(OR)_n\text{-}O\text{-}(L'')_{m''}\text{-}R' \qquad (II)$$

handelt, wobei R' für ein Wasserstoffatom, eine Acylgruppe oder eine lineare oder verzweigte Alkylgruppe, die gegebenenfalls durch eine oder mehrere funktionelle Gruppen substituiert ist und gegebenenfalls eine oder mehrere Doppelbindungen aufweist, $(OR)_n$ für eine solche Polyoxyalkylengruppe steht, dass R für eine lineare oder verzweigte, vorzugsweise lineare, Alkylengruppe steht, L' und L" für zweiwertige Gruppen stehen, X, Y und m wie in Anspruch 5 definiert sind, n' für eine ganze Zahl im Bereich von 1 bis 10 steht, n für eine ganze Zahl im Bereich von 2 bis 30 steht, m' gleich 0 oder 1, vorzugsweise 0, ist und m" gleich 0 oder 1 ist.

7. Brillenglas nach Anspruch 6, **dadurch gekennzeichnet, dass** R' für eine Alkylgruppe steht und vorzugsweise m"=0.

8. Brillenglas nach einem der Ansprüche 6 oder 7, **dadurch gekennzeichnet, dass** es sich bei der Organosilanverbindung um eine Verbindung der Formel (II), in der n = 5-30, vorzugsweise n = 5-15, noch besser n = 6-9, handelt.

9. Brillenglas nach einem der vorhergehenden Ansprüche, **dadurch gekennzeichnet, dass** es sich bei der Organosilanverbindung um ein [Alkoxy-(polyalkylenoxy)alkyl]trialkoxysilan, vorzugsweise ein 2-[Methoxy(polyethylenoxy)propyl]trimethoxysilan, noch besser eine Verbindung der Formel $CH_3O\text{-}(CH_2CH_2O)_{6\text{-}9}\text{-}(CH_2)_3Si(OCH_3)_3$ oder $CH_3O\text{-}(CH_2CH_2O)_{9\text{-}12}\text{-}(CH_2)_3Si(OCH_3)_3$, handelt.

10. Brillenglas nach einem der vorhergehenden Ansprüche, **dadurch gekennzeichnet, dass** die Organosilanverbindung kein Fluoratom aufweist.

11. Brillenglas nach einem der vorhergehenden Ansprüche, **dadurch gekennzeichnet, dass** die Polyoxyalkylengruppe der Organosilanverbindung weniger als 60 Kohlenstoffatome, vorzugsweise weniger als 50 Kohlenstoffatome, aufweist.

12. Verfahren zur Herstellung eines Brillenglases nach einem der vorhergehenden Ansprüche, bei dem man:

    - ein Substrat bereitstellt, das mit einer Beschichtung beschichtet ist, die an ihrer Oberfläche Silanolgruppen aufweist,
    - auf die Beschichtung mindestens eine Organosilanverbindung mit einer Polyoxyalkylengruppe mit weniger als 80 Kohlenstoffatomen und mindestens einem Siliciumatom, das mindestens eine hydrolysierbare Gruppe trägt, aufbringt, wobei man eine Schicht aus aufgepfropfter Organosilanverbindung mit einer Dicke kleiner gleich 5 nm erhält, deren Oberfläche einen statischen Kontaktwinkel mit Wasser von mehr als 10° und weniger als 50° aufweist.

13. Verfahren nach Anspruch 12, **dadurch gekennzeichnet, dass** eine Schicht aus aufgepfropfter Organosilanverbindung mit einer Dicke kleiner gleich 5 nm durch Entfernung des Überschusses von aufgebrachter, aber nicht auf die Oberfläche der Silanolgruppen aufweisenden Beschichtung aufgepfropfter Organosilanverbindung erhalten wird.

14. Verfahren nach Anspruch 12 oder 13, **dadurch gekennzeichnet, dass** die Organosilanverbindung durch Vakuumverdampfung auf der Beschichtung, die an ihrer Oberfläche Silanolgruppen aufweist, aufgebracht wird.

15. Optischer Artikel, umfassend ein Substrat, das mit einer Beschichtung beschichtet ist, die an ihrer Oberfläche Silanolgruppen aufweist, wobei ein Teil der Oberfläche der Beschichtung an ihrer Oberfläche Silanolgruppen aufweist, die in direktem Kontakt mit einer hydrophoben und/oder oleophoben Beschichtung stehen und daran haften, **dadurch gekennzeichnet, dass** ein anderer Teil der Oberfläche der Beschichtung, die an ihrer Oberfläche Silanolgruppen aufweist, in direktem Kontakt mit einer Vorläuferbeschichtung für eine Antibeschlagbeschichtung gemäß einem der Ansprüche 1 bis 11 steht.

**Claims**

1. A lens for spectacles comprising a substrate coated with a coating comprising silanol groups on its surface and, directly contacting this coating, a precursor coating of an antifog coating, the precursor coating of the antifog coating being obtained through the grafting of at least one organosilane compound having:

   - a polyoxyalkylene group comprising less than 80 carbon atoms, and
   - at least one silicon atom bearing at least one hydrolyzable group,

   **characterized in that** the precursor coating of the antifog coating:

   - has a static contact angle with water of more than 10° and of less than 50°.
   - has a thickness lower than or equal to 5 nm.

2. A lens for spectacles according to claim 1, **characterized in that** the anti-fog coating precursor coating is coated with a film of a liquid solution comprising at least one surfactant and/or hydrophilic compound with no surface active properties, preferably a surfactant comprising poly(oxyalkylene) groups.

3. A lens for spectacles according to claim 2, **characterized in that** it has a static contact angle with water lower than or equal to 10°, more preferably lower than or equal to 5°.

4. A lens for spectacles according to any one of claims 1 to 3, **characterized in that** the coating comprising silanol groups on its surface is an antireflective coating or a layer based on silica deposited onto an abrasion-resistant coating.

5. A lens for spectacles according to any one of claims 1 to 4, **characterized in that** the organosilane compound is a compound of formula:

   $$R^1Y_mSi(X)_{3-m} \qquad (I)$$

   wherein the Y groups, being the same or different, are monovalent organic groups bound to the silicon through a carbon atom, the X groups, being the same or different, are hydrolyzable groups, $R^1$ is a group comprising a polyoxyalkylene function, m is an integer equal to 0, 1 or 2.

6. A lens for spectacles according to claim 5, **characterized in that** the organosilane compound is a compound of formula:

   $$Y_m(X)_{3-m}Si(CH_2)_{n'}\text{-}(L')_{m'}\text{-}(OR)_n\text{-}O\text{-}(L'')_{m''}\text{-}R' \qquad (II)$$

   wherein R' is a hydrogen atom, an acyl group or an alkyl group, linear or branched, optionally substituted by one or more functional groups, and comprising optionally one or more double bonds, $(OR)_n$ is a polyoxyalkylene group such that R is a linear or branched alkylene group, preferably linear, L' and L" are divalent groups, X, Y and m are such as defined in claim 5, n' is an integer ranging from 1 to 10, n is an integer ranging from 2 to 30, m' is 0 or 1, preferably 0, m" is 0 or 1.

7. A lens for spectacles according to claim 6, **characterized in that** R' is an alkyl group, and preferably m" = 0.

8. A lens for spectacles according to any one of claims 6 or 7, **characterized in that** the organosilane compound is a compound of formula (II) wherein n = 5-30, preferably n = 5-15, more preferably n = 6-9.

9. A lens for spectacles according to any one of the preceding claims, **characterized in that** the organosilane compound is an [alkoxy(polyalkylenoxy)alkyl]trialkoxysilane, preferably a 2-[methoxy(polyethyleneoxy)propyl]trimethoxysilane, more preferably a compound of formula $CH_3O\text{-}(CH_2CH_2O)_{6\text{-}9}\text{-}(CH_2)_3Si(OCH_3)_3$ or $CH_3O\text{-}(CH_2CH_2O)_{9\text{-}12}\text{-}(CH_2)_3Si(OCH_3)_3$.

10. A lens for spectacles according to any one of preceding claims, **characterized in that** the organosilane compound has no fluorine atom.

11. A lens for spectacles according to any one of preceding claims, **characterized in that** the polyoxyalkylene group

of the organosilane compound comprises less than 60 carbon atoms, preferably less than 50 carbon atoms.

**12.** A method for preparing a lens for spectacles according to any one of the preceding claims, comprising the steps of:

- providing a substrate coated with a coating comprising silanol groups on the surface thereof,
- depositing onto said coating at least one organosilane compound having a polyoxyalkylene group comprising less than 80 carbon atoms and at least one silicon atom bearing at least one hydrolyzable group, so as to obtain a layer of grafted organosilane compound having a thickness lower than or equal to 5 nm, the surface of which has a static contact angle with water of more than 10° and of less than 50°.

**13.** A method according to claim 12, **characterized in that** a layer of grafted organosilane compound having a thickness lower than or equal to 5 nm is obtained by removing the deposited but not grafted organosilane compound in excess on the surface of the coating comprising silanol groups.

**14.** A method according to claim 12 or 13, **characterized in that** said organosilane compound is deposited by evaporation under vacuum onto said coating comprising silanol groups on the surface thereof.

**15.** An optical article comprising a substrate coated with a coating comprising silanol groups on its surface, a part of the surface of said coating comprising silanol groups on its surface being in direct contact with, and adhering to, a hydrophobic and/or oleophobic coating, **characterized in that** another part of the surface of said coating comprising silanol groups on its surface is in direct contact with a coating precursor of an antifog coating such as defined in any one of claims 1 to 11.

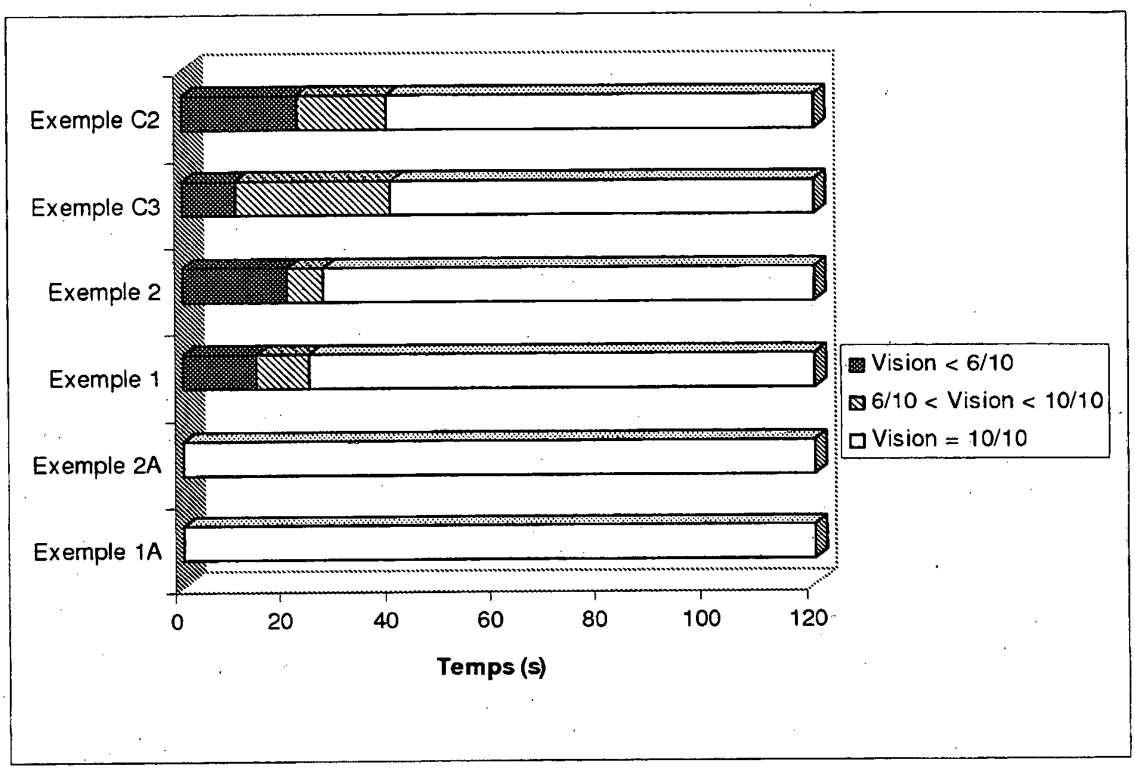
Exemple C2
Exemple C3
Exemple 2
Exemple 1
Exemple 2A
Exemple 1A
0
20
40
60
80
100
120
Temps (s)
Vision < 6/10
6/10 < Vision < 10/10
Vision = 10/10

**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1324078 A
- US 6251523 B
- US 6379776 B
- US 5997621 A
- WO 9743668 A
- EP 0871046 A
- EP 1275624 A
- JP 2004317539 A
- JP 2005281143 A
- EP 0614957 A
- US 4211823 A
- US 5015523 A
- JP 63141001 A
- JP 63087223 A
- EP 0404111 A
- US 5316791 A
- EP 0680492 A
- FR 2858420
- EP 1418211 A
- WO 2010055261 A
- US 5792537 A
- EP 614957 A
- US 6183872 B

### Littérature non-brevet citée dans la description

- Thin Film Processes. Thin Film Processes II. Academic Press, 1978